# EUROPEAN PATENT APPLICATION

(11) **EP 4 637 124 A1**
(43) Date of publication of application: **22.10.2025**
(21) Application number: 24816693.6
(22) Date of filing: 02.12.2024
(51) Int. Cl.: H04M 1/02, H01Q 1/24, H01Q 1/08, H05K 5/02, H05K 1/02, F16H 19/04

(54) **FOLDABLE ELECTRONIC DEVICE COMPRISING ROTATABLE ANTENNA MODULES**

(30) Priority: 29.02.2024 KR 20240030330; 01.04.2024 KR 20240044403
(71) Applicant: Samsung Electronics Co., Ltd, Suwon-si, Gyeonggi-do 16677 (KR)
(72) Inventor: KIM, Sunglak, Suwon-si, Gyeonggi-do 16677 (KR); KIM, Namwoo, Suwon-si, Gyeonggi-do 16677 (KR); KIM, Hyunmuk, Suwon-si, Gyeonggi-do 16677 (KR); RYU, Jooyeol, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); JUNG, Songhee, Suwon-si, Gyeonggi-do 16677 (KR); CHOI, Sunyong, Suwon-si, Gyeonggi-do 16677 (KR); CHOI, Junyoung, Suwon-si, Gyeonggi-do 16677 (KR); CHOI, Jinwook, Suwon-si, Gyeonggi-do 16677 (KR)
(74) Representative: Nederlandsch Octrooibureau
(86) International application number: PCT/KR2024/019506
(87) International publication number: WO 2025/183310

(57) **Abstract**

The electronic device includes a first housing part, a second housing part rotatably coupled to the first housing part, a first antenna module located in the first housing part, a first wireless communication circuit disposed in the first housing part, and electrically connected to the first antenna module, a second antenna module located in the second housing part, a second wireless communication circuit disposed in the second housing part, and electrically connected to the second antenna module, a first link assembly configured to rotate the first antenna module, and a second link assembly configured to rotate the second antenna module. While the first housing part rotates with respect to the second housing part, a radiation direction of the first antenna module and a radiation direction of the second antenna module face each other. The first wireless communication circuit is configured to transmit or receive a radio frequency (RF) signal through the first antenna module. The second wireless communication circuit is configured to receive or transmit the RF signal through the second antenna module.

## Description

### [Technical Field]

The following descriptions relate to a foldable electronic device comprising a rotatable antenna module.

### [Background Art]

With development of mobile technology, a foldable electronic device that combines a wide display of a tablet and a compact form factor of a smart phone is being developed. This foldable electronic device may include housing parts that may be folded or unfolded by rotating with respect to each other based on a hinge assembly, and may include a flexible printed circuit board across the hinge assembly for signal transmission between the housing parts.

The above-described information may be provided as a related art for the purpose of helping understanding the present disclosure. No argument or decision is made as to whether any of the above description may be applied as a prior art related to the present disclosure.

### [Disclosure]

### [Technical Solution]

According to an embodiment, an electronic device may include a first housing part, a second housing part rotatably coupled to the first housing part, a first antenna module located in the first housing part, a first wireless communication circuit disposed in the first housing part, and electrically connected to the first antenna module, a second antenna module located in the second housing part, a second wireless communication circuit disposed in the second housing part, and electrically connected to the second antenna module, a first link assembly configured to rotate the first antenna module, and a second link assembly configured to rotate the second antenna module. While the first housing part rotates with respect to the second housing part, a radiation direction of the first antenna module and a radiation direction of the second antenna module may face each other. The first wireless communication circuit may be configured to transmit or receive a radio frequency (RF) signal through the first antenna module. The second wireless communication circuit may be configured to receive or transmit the RF signal through the second antenna module.

According to an embodiment, an electronic device may include a first housing part, a second housing part rotatably coupled to the first housing part, a first antenna module located in the first housing part, and including a surface on which a first antenna array is arranged, a first wireless communication circuit disposed in the first housing part, and electrically connected to the first antenna module, a second antenna module located in the second housing part, and including a surface on which a second antenna array is arranged, a second wireless communication circuit disposed in the second housing part, and electrically connected to the second antenna module, a first link assembly configured to rotate the first antenna module such that the surface on which the first antenna array of the first antenna module is arranged faces the second antenna module while the first housing part rotates with respect to the second housing part, a second link assembly configured to rotate the second antenna module such that the surface on which the second antenna array of the second antenna module is arranged faces the first antenna module while the second housing part rotates with respect to the first housing part. The first wireless communication circuit may be configured to transmit a radio frequency (RF) signal through the first antenna module. The second wireless communication circuit may be configured to receive the RF signal through the second antenna module.

### [Description of the Drawings]

FIG. 1 is a block diagram illustrating an electronic device in a network environment according to various embodiments.
FIG. 2A is a perspective view of a front direction of an electronic device according to an embodiment.
FIG. 2B is a plan view of a rear direction of an electronic device according to an embodiment.
FIG. 2C is a partial exploded perspective view of an electronic device of FIG. 2A and FIG. 2B including a hinge device according to an embodiment.
FIG. 3A is a plan view of a front direction of an electronic device according to an embodiment.
FIG. 3B is a plan view of a rear direction of an electronic device according to an embodiment.
FIG. 4A is a drawing illustrating a first antenna assembly and a first link assembly according to an embodiment.
FIG. 4B is a drawing illustrating a first antenna assembly, a first link assembly, and a hinge assembly according to an embodiment.
FIG. 4C is an exploded view of a first antenna assembly, a first link assembly, a hinge assembly, and a first housing according to an embodiment.
FIG. 4D is a drawing illustrating a first antenna assembly, a first link assembly, a hinge assembly, and a first housing according to an embodiment.
FIG. 4E is a drawing illustrating a first antenna assembly, a first link assembly, a hinge assembly, and a first housing according to an embodiment.
FIG. 4F is a drawing illustrating a first antenna assembly, and a first link according to an embodiment.
FIG. 5 is a drawing for describing an operation of an antenna assembly and a link mechanism according to an embodiment.
FIG. 6A illustrates an electronic device in a first state according to an embodiment.
FIG. 6B illustrates an electronic device in a third state according to an embodiment.
FIG. 6C illustrates an electronic device in a second state according to an embodiment.
FIG. 7A is a drawing illustrating an upper surface of an antenna module according to an embodiment.
FIG. 7B is a drawing illustrating a rear surface of an antenna module according to an embodiment.
FIG. 7C is a drawing illustrating a cross section of an antenna module according to an embodiment.
FIG. 8 illustrates a cross section for line B-B' of an antenna module 700 of FIG. 7A.
FIG. 9 is a drawing illustrating a first antenna assembly, a first link assembly, a hinge assembly, and a first housing according to an embodiment.
FIG. 10A is a drawing illustrating an electronic device including a connecting member of an antenna module according to an embodiment.
FIG. 10B is a drawing illustrating an electronic device including a connecting member of an antenna module according to an embodiment.
FIG. 11A is a drawing illustrating an electronic device in a fully unfolded first state according to an embodiment.
FIG. 11B is a drawing illustrating an electronic device in a fully unfolded first state according to an embodiment.
FIG. 11C is a drawing illustrating a hinge cover of a hinge assembly according to an embodiment.
FIG. 11D is a drawing illustrating a hinge cover of a hinge assembly according to an embodiment.
FIG. 12A illustrates an electronic device in a fully unfolded first state according to an embodiment.
FIG. 12B illustrates a rear surface of a display according to an embodiment.
FIG. 12C illustrates an electronic device in a third state which is an intermediate state according to an embodiment.
FIG. 12D illustrates an electronic device in a fully folded second state according to an embodiment.
FIG. 13 is a block diagram of an electronic device according to an embodiment.
FIG. 14 is a block diagram of an electronic device according to an embodiment.
FIG. 15 is a graph illustrating a voltage standing wave ratio (VSWR) of an antenna module according to an embodiment.
FIG. 16A is a graph illustrating an S parameter S21 of an antenna module of an electronic device in a folded state according to an embodiment.
FIG. 16B is a graph illustrating a voltage standing wave ratio of an antenna module of an electronic device in a folded state according to an embodiment.
FIG. 17A is a graph illustrating an S parameter S21 of an antenna module of an electronic device in an unfolded state according to an embodiment.
FIG. 17B is a graph illustrating a voltage standing wave ratio of an antenna module of an electronic device in an unfolded state according to an embodiment.
FIG. 18A illustrates an electronic device in an unfolded state according to an embodiment.
FIG. 18B illustrates an electronic device in a folded state according to an embodiment.
FIG. 19A illustrates an electronic device in an unfolded state according to an embodiment.
FIG. 19B illustrates an electronic device in a folded state according to an embodiment.
FIG. 20A illustrates an electronic device in an unfolded state according to an embodiment.
FIG. 20B illustrates an electronic device in a folded state according to an embodiment.

### [Mode for Invention]

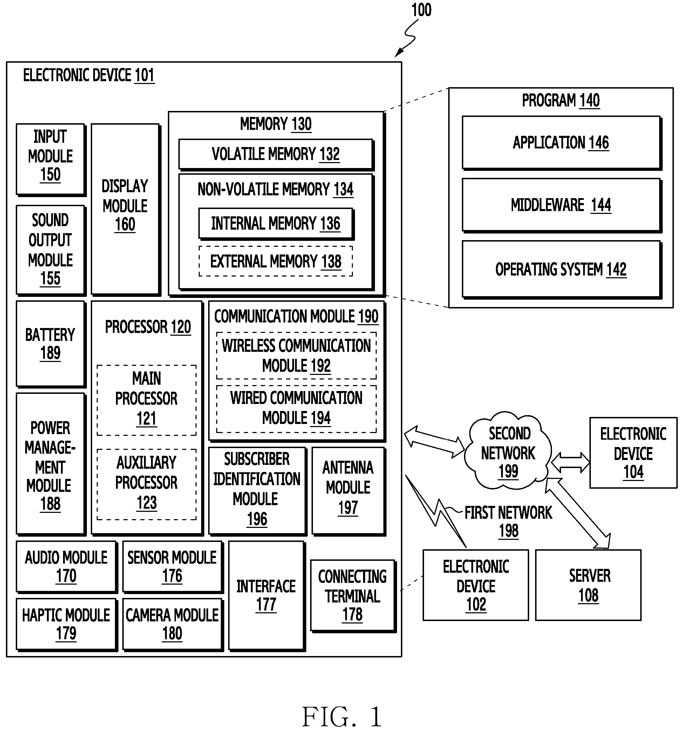

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

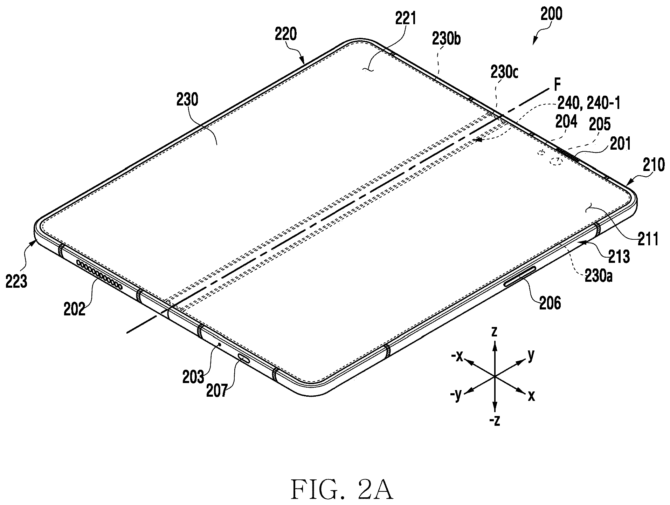

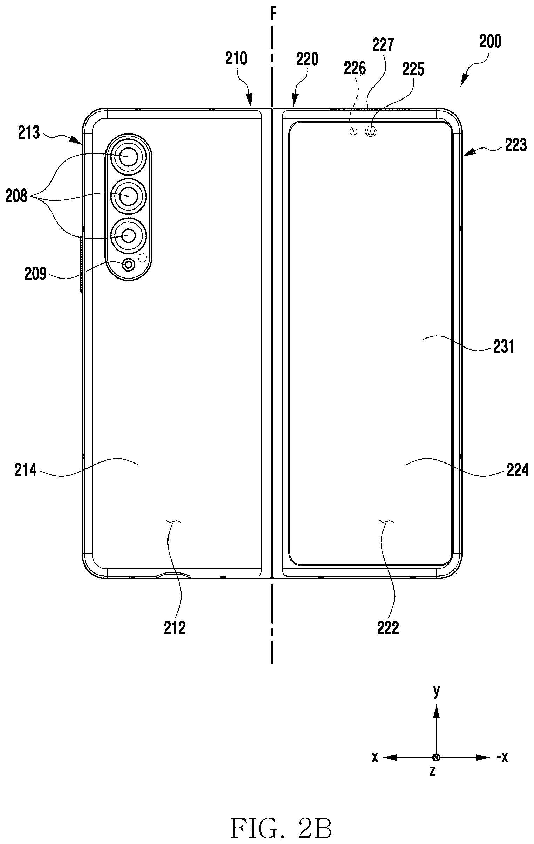

FIG. 2A is a perspective view of a front direction of an electronic device according to an embodiment. FIG. 2B is a plan view of a rear direction of an electronic device according to an embodiment.

Referring to FIGS. 2A and 2B, an electronic device 200 may include a first housing 210 (e.g., a first housing member, a first housing part, or a first housing structure) and a second housing 220 (e.g., a second housing member, a second housing part, or a second housing structure). The first housing 210 and the second housing 220 may be rotatably or foldably coupled with respect to each other through at least one hinge device 240 and 240-1 (e.g., a hinge structure or a hinge module). For example, the first housing 210 and the second housing 220 may be folded or unfolded with respect to each other based on a folding axis F. For example, the first housing 210 may rotate with respect to the second housing 220, through the at least one hinge device 240 and 240-1, based on the folding axis F and/or at least one first axis substantially parallel to the folding axis F. For example, the second housing 220 may rotate with respect to the first housing 210, through the at least one hinge device 240 and 240-1, based on the folding axis F and/or at least one second axis substantially parallel to the folding axis F.

In an embodiment, the first housing 210 may include a first surface 211 and a second surface 212 facing an opposite direction (e.g., a -z axis direction) of the first surface 211. For example, the second housing 220 may include a first surface 221 and a second surface 222 facing an opposite direction (e.g., a -z axis direction) of the first surface 221.

In an embodiment, the first housing 210 and the second housing 220 may be configured as a foldable housing (e.g., a housing structure). For example, the electronic device 200 may include a first state (e.g., an unfolded state) in which the first housing 210 and the second housing 220 are fully unfolded, a second state (e.g., a folded state) in which the first housing 210 and the second housing 220 are fully folded, and a third state (e.g., an intermediate state) between the first state and the second state. For example, in the first state, the first housing 210 and the second housing 220 of the electronic device 200 may lie on a plane. For example, in the first state, the electronic device 200 (or the foldable housing) may operate such that the first surface 211 of the first housing 210 and the first surface 221 of the second housing 220 face substantially the same direction (e.g., z axis direction). For example, in the second state, at least a portion of the first housing 210 of the electronic device 200 may be overlain the second housing 220. For example, in the second state, the electronic device 200 (or the foldable housing) may operate such that the first surface 211 of the first housing 210 and the first surface 221 of the second housing 220 face each other or are directed in opposite directions each other.

In an embodiment, the first housing 210 may include a first lateral side member 213 (e.g., a side bezel) and a first rear cover 214 coupled to the first lateral side member 213. For example, the second housing 220 may include a second lateral side member 223 (e.g., a side bezel) and a second rear cover 224 coupled to the second lateral side member 223.

In an embodiment, the electronic device 200 may include a first display 230 (e.g., a flexible display, a foldable display, or a main display) disposed to be supported by the first housing 210 and the second housing 220. The first display 230 may be viewed through the first surface 211 of the first housing 210 and the first surface 221 of the second housing 220. For example, the electronic device 200 may include a window (not illustrated) disposed on the first display 230 to at least partially form the first surface 211 of the first housing 210 and the first surface 221 of the second housing 220. At least the portion of the window may include a substantially transparent area, and the first display 230 may be viewed through the transparent area of the window. The window may be formed from plastic and/or glass, which is configured to be flexible. The window may be attached to the first display 230, and in this respect, the window may be understood as being included in the first display 230. In terms of the window forming the first surface 211 of the first housing 210 and the first surface 221 of the second housing 220, the window or the first display 230 including the window may be understood as being included in the foldable housing of the electronic device 200.

According to an embodiment, the electronic device 200 may include a first receiver 201 disposed on the first surface 211 of the first housing 210, at least one first sensor module 204 (e.g., an illuminance sensor), and/or at least one first camera module 205 (e.g., an under display camera (UDC)). For example, the electronic device 200 may include at least one key 206 disposed on the first lateral side member 213. For example, the electronic device 200 may include at least one second camera module 208 and/or a flash 209 disposed on the second surface 212 (e.g., the first rear cover 214) of the first housing 210. For example, the electronic device 200 may include a second display 231 disposed on the second surface 222 of the second housing 220, at least one third camera module 225 (e.g., an under display camera (UDC)), at least one second sensor module 226, and/or a second receiver 227. For example, the second display 231 may be disposed to be viewed from the outside through at least a portion of the second rear cover 224. For example, the electronic device 200 may include a speaker 202 disposed on the second lateral side member 223, a microphone 203 and/or a connector port 207 disposed on the first lateral side member 213. Disposition of at least a portion of the plurality of components described above may be changed to the first housing 210 and/or the second housing 220.

According to an embodiment, the first display 230 may include a first area 230a (e.g., a first planar portion) corresponding to at least the portion of the first surface 211 of the first housing 210, a second area 230b (e.g., a second planar portion) corresponding to at least the portion of the first surface 221 of the second housing 220, and a third area 230c (e.g., a flexible portion) that connects the first area 230a and the second area 230b and is modified according to a state (e.g., the first state, the second state, or the third state) of the electronic device 200. For example, the third area 230c may be disposed in a position at least partially overlapping the at least one hinge device 240 and 240-1 when the first display 230 is viewed from above (e.g., in the z axis direction). For example, as the first surface 211 of the first housing 210 faces the first surface 221 of the second housing 220 each other, the first display 230 may be disposed to be invisible from the outside in the second state (e.g., an inward-fold type or an in-folding type). For example, as the first surface 211 and the first surface 221 are directed in opposite directions, the first display 230 may be disposed to be visible from the outside (e.g., an outward-fold type or an out-folding type).

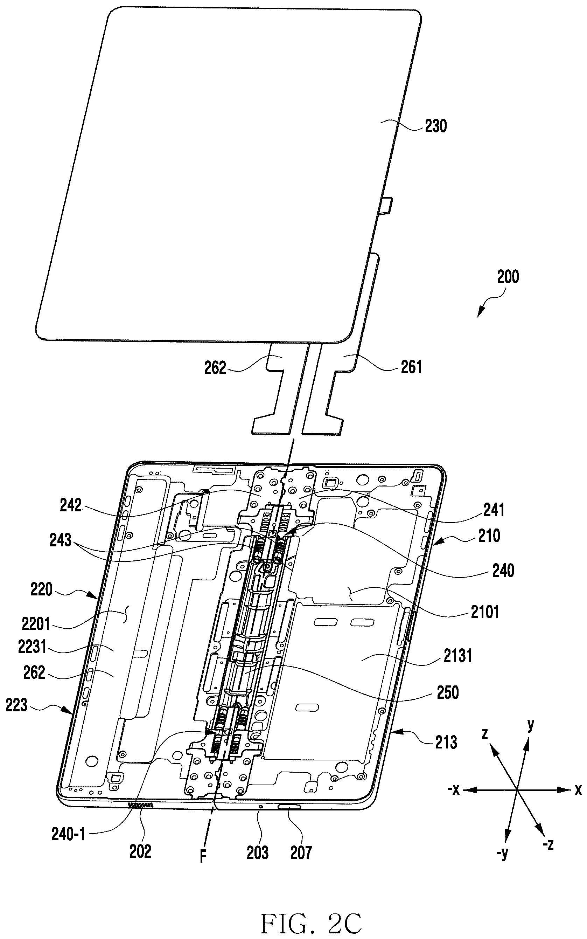

FIG. 2C is a partial exploded perspective view of an electronic device of FIG. 2A and FIG. 2B including a hinge device according to an embodiment.

Referring to FIG. 2C, the first housing 210 may include the first lateral side member 213 and a first support member 2131 extending from the first lateral side member 213 to the inside of the first housing 210. The first support member 2131 may be at least partially surrounded by the first lateral side member 213. The second housing 220 may include a second lateral side member 213 and a second support member 2231 extending from the second lateral side member 223 to the inside of the second housing 220. The second support member 2231 may be at least partially surrounded by the second lateral side member 223.

In an embodiment, the first lateral side member 213 and the first support member 2131 of the first housing 210 may form a space in which various components of the electronic device 200 may be disposed, such as a first space 2101 (e.g., a first interior space), or a first interior volume of the first housing 210. The second lateral side member 223 and the second support member 2231 of the second housing 220 may form a space in which various components of the electronic device 200 may be disposed, such as a second space 2201 (e.g., a second interior space or a second interior volume) of the second housing 220.

In an embodiment, the electronic device 200 may include the at least one hinge device 240 and 240-1 connecting the first housing 210 and the second housing 220 under the first display 230 (e.g., -z axis direction). For example, the at least one hinge device 240 and 240-1 may include a first hinge device 240 and a second hinge device 240-1 spaced apart from the first hinge device 240 in a direction (e.g., ± y axis direction) parallel to the folding axis F. For example, the at least one hinge device 240 and 240-1 may be supported by the first support member 2131 and the second support member 2231. In an embodiment, the at least one hinge device 240 and 240-1 may be disposed in a hinge cover 250 (e.g., a hinge housing). For example, the at least one hinge device 240 and 240-1 may be disposed between the first housing 210 and the second housing 220 to be invisible from the outside through the hinge cover 250 (e.g., the hinge housing).

According to an embodiment, the first hinge device 240 may include a first rotation member 241 (e.g., a first arm or a first rotator) coupled to the first support member 2131 of the first housing 210, and a second rotation member 242 (e.g., a second arm or a second rotator) coupled to the second support member 2231 of the second housing 220, and a gear assembly 243 connected to the first rotation member 241 and the second rotation member 242 such that the first housing 210 and the second housing 220 rotate symmetrically with respect to each other. For example, the gear assembly 243 may include a plurality of gears (e.g., spur gears and/or worm gears) that are gear-coupled to each other. For example, the gear assembly 243 may include a cam coupling structure for pressing the first housing 210 and the second housing 220 in a direction of transition from the first state to the second state or in a direction of transition from the second state to the first state based on a certain angle with respect to each other, and for providing a free stop (e.g., for maintaining the third state) at various folding angles. For example, the second hinge device 240-1 may have substantially the same configuration as the first hinge device 240.

According to an embodiment, the electronic device 200 may include a first hinge plate 261 connected to the first support member 2131 and/or the first rotation member 241. The electronic device 200 may include a second hinge plate 262 connected to the second support member 2231 and/or the second rotation member 242. For example, the at least one hinge device 240 and 240-1, the first rotation member 241, the second rotation member 242, the first hinge plate 261, and the second hinge plate 262 may form substantially the same plane as the first support member 2131 and the second support member 2231 when the electronic device 200 is in the first state. For example, the second hinge device 240-1 may be substantially symmetrical or may have substantially the same configuration as the first hinge device 240. The first hinge device 240, the second hinge device 240-1, and/or the hinge cover 250 may be referred to as a hinge assembly of the electronic device 200.

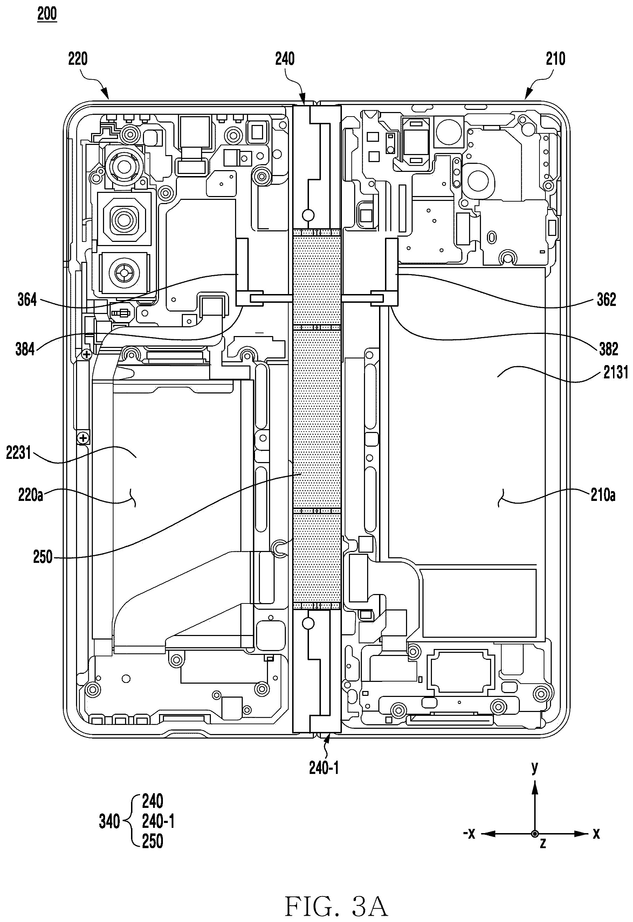

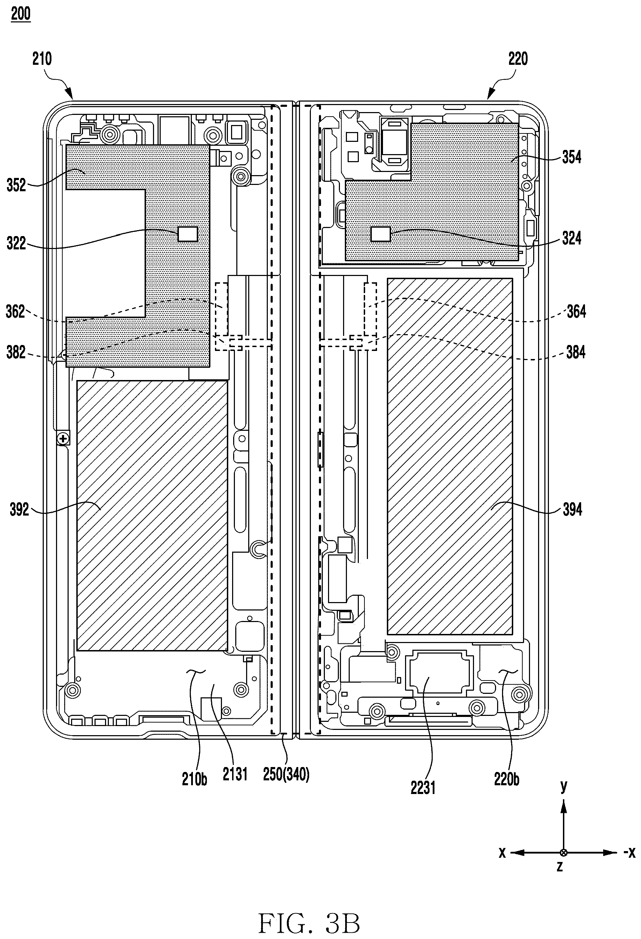

FIG. 3A is a plan view of a front direction of an electronic device according to an embodiment. FIG. 3B is a plan view of a rear direction of an electronic device according to an embodiment. FIG. 3A may be a drawing in which the first display 230, the first hinge plate 261, and the second hinge plate 262 of FIG. 2C are omitted. FIG. 3B may be a drawing in which the second display 231, the first rear cover 214, and the second rear cover 224 of FIG. 2B are omitted.

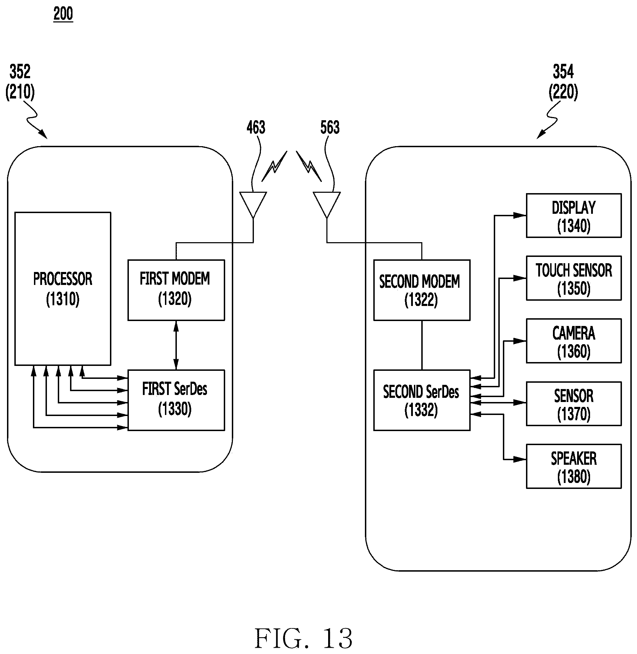

Referring to FIGS. 3A and 3B, an electronic device 200 according to an embodiment may include a hinge assembly 340, a first antenna assembly 362, a first link assembly 382, a second antenna assembly 364, and a second link assembly 384. Referring to FIG. 3B, the electronic device 200 according to an embodiment may include a first substrate 352, a second substrate 354, a first wireless communication circuit 322, a second wireless communication circuit 324, a first battery 392, and a second battery 394. The first wireless communication circuit 322 and the second wireless communication circuit 324 may be an example of the wireless communication module 192 of FIG. 1. The first wireless communication circuit 322 may include a first modem 1320 of FIG. 13 and may optionally or additionally include a first serializer/deserializer (SerDes) 1330. The first battery 392 and the second battery 394 may be an example of the battery 182 of FIG. 1. The second wireless communication circuit 324 may include a second modem 1322 of FIG. 13 and may optionally or additionally include a second SerDes 1332.

Referring to FIGS. 3A and 3B, the first antenna assembly 362 may be disposed in a first housing 210. For example, the first antenna assembly 362 may be disposed in an interior space of the first housing 210 (e.g., the first space 2101 of FIG. 2C). For example, the first antenna assembly 362 may be disposed on a first surface 210a of a first support member 2131. For example, based on FIG. 3A, the first surface 210a of the first support member 2131 may face a +z direction. The second antenna assembly 364 may be disposed in a second housing 220. For example, the second antenna assembly 364 may be disposed in an interior space (e.g., the second space 2201 of FIG. 2C) of the second housing 220. For example, the second antenna assembly 364 may be disposed on a first surface 220a of a second support member 2231. For example, based on FIG. 3A, the first surface 220a of the second support member 2231 may face the +z direction.

The first substrate 352 may be disposed in the first housing 210. For example, the first substrate 352 may be disposed on a second surface 210b of the first support member 2131 opposite to the first surface 210a. For example, based on FIG. 3B, the second surface 210b of the first support member 2131 may face a -z direction. The second substrate 354 may be disposed in the second housing 220. For example, the second substrate 354 may be disposed on the second surface 220b of the second support member 2231 opposite to the first surface 220a. For example, based on FIG. 3B, the second surface 220b of the second support member 2231 may face the -z direction. The first substrate 352 and the second substrate 354 may include a printed circuit board.

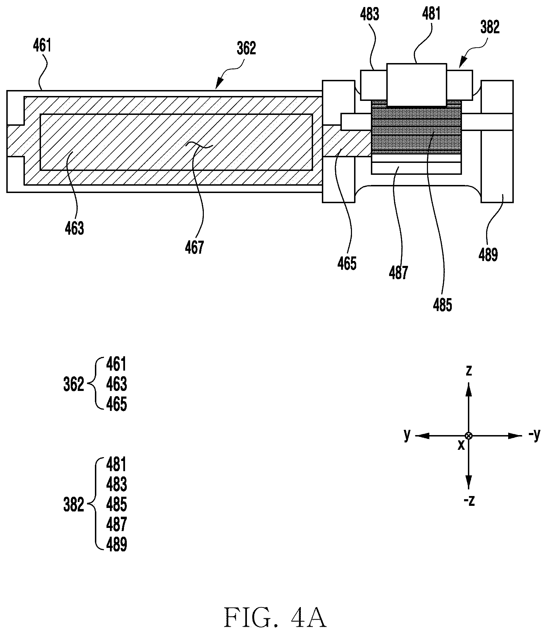

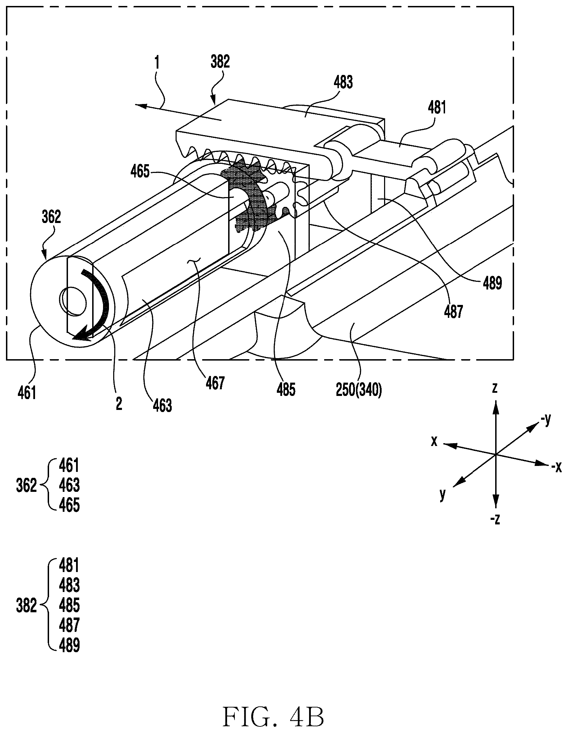

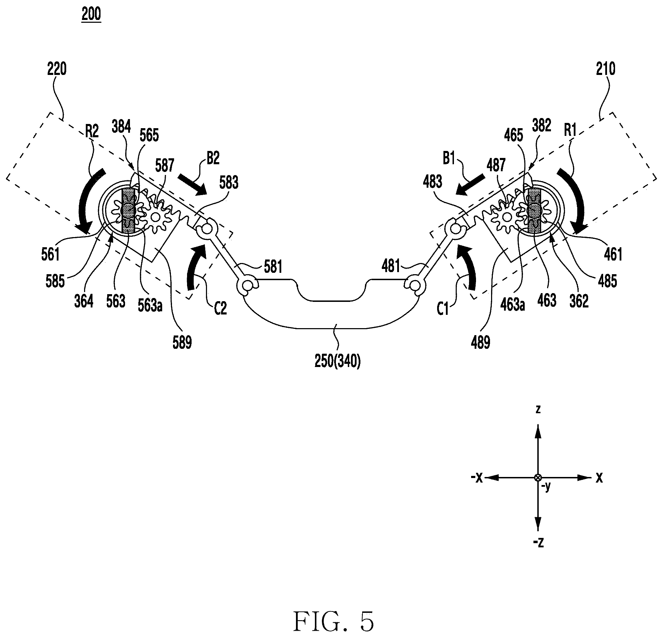

The first wireless communication circuit 322 may be disposed on the first substrate 352, and the second wireless communication circuit 324 may be disposed on the second substrate 354. Although not illustrated, the first antenna assembly 362 may include a first antenna module (e.g., a first antenna module 463 of FIGS. 4A and 4B) that is electrically connected to the first wireless communication circuit 322 and used to transmit and receive a radio frequency signal (RF). In addition, the second antenna assembly 364 may include a second antenna module (e.g., the second antenna module 563 of FIG. 5) that is electrically connected to the second wireless communication circuit 324 to transmit and receive a RF signal.

The first wireless communication circuit 322 may transmit a RF signal to the second wireless communication circuit 324 or receive the RF signal from the second wireless communication circuit 324 using the first antenna assembly 362 (or the first antenna module). The second wireless communication circuit 324 may transmit a RF signal to the first wireless communication circuit 322 or receive the RF signal from the first wireless communication circuit 322 using the second antenna assembly 364 (or the second antenna module). Using the first antenna assembly 362 and the second antenna assembly 364, the RF signal transmitted and received between the first wireless communication circuit 322 and the second wireless communication circuit 324 may operate in a frequency band of 60 GHz. For example, the frequency band of 60 GHz may include frequencies from approximately 57 GHz (preferably 57.00 GHz) up to 71 GHz (preferably 71.00 GHz, more preferably 66 GHz, most preferably 66.00 GHz). For example, a frequency (e.g., a carrier frequency) of the RF signal transmitted and received between the first antenna module of the first antenna assembly 362 and the second antenna module of the second antenna assembly 364 may be included in the frequency band of 60 GHz. However, the frequency of the RF signal is not limited by the above-described example.

In an embodiment, the first link assembly 382 may be located in the first housing 210, and the second link assembly 384 may be located in the second housing 220. The hinge assembly 340 (e.g., a hinge cover 250) may be at least partially located between the first link assembly 382 and the second link assembly 384.

The hinge assembly 340 may include at least one hinge device 240 and 240-1 and the hinge cover 250. The hinge assembly 340 (e.g., the hinge cover 250) may be located between the first antenna assembly 362 and the second antenna assembly 364. In an embodiment, the first housing 210 and the second housing 220 may rotate with respect to each other through the hinge assembly 340. While the first housing 210 rotates with respect to the second housing 220, the first antenna assembly 362 disposed in the first housing 210 may move together with the first housing 210. In addition, while the second housing 220 rotates with respect to the first housing 210, the second antenna assembly 364 disposed in the second housing 220 may move together with the second housing 220.

Accordingly, alignment between the first antenna module of the first antenna assembly 362 and the second antenna module of the second antenna assembly 364 may vary, and wireless communication performance using the first antenna assembly 362 and the second antenna assembly 364 may vary. In particular, in case that a signal with strong straightness, such as a signal in the 60 GHz frequency band is used, or in case that the antenna module is configured with a directional antenna in a specific direction, an effect of a change in the alignment between the first antenna module and the second antenna module on the wireless communication performance between them may increase. In other words, during rotation a relative angle between the first antenna assembly 362 and the second antenna assembly 364 may not be constant, and this may impact the strength of signals transmitted between the antenna assemblies. In case that directional antennas are used, and/or if the strength of the signal has a relatively high angular dependence, this impact on the strength of the signal may be relatively large.

To prevent this, the first link assembly 382 according to an embodiment may be configured to rotate the first antenna module of the first antenna assembly 362 and/or the first antenna module of the first antenna assembly 362 such that the first antenna module the first antenna assembly 362 faces the second antenna module of the second antenna assembly 364 while the first housing 210 rotates with respect to the second housing 220. According to an embodiment, the second link assembly 384 may be configured to rotate the second antenna assembly 364 and/or the second antenna module of the second antenna assembly 364 such that the second antenna module of the second antenna assembly 364 faces the first antenna module of the first antenna assembly 362 while the second housing 220 rotates with respect to the first housing 210. In this way, the relative angle between the antenna modules does not change during the rotation, which may enable the signal strength for signals transmitted between the antenna modules to remain similar irrespective of the position of the hinge assembly 340.

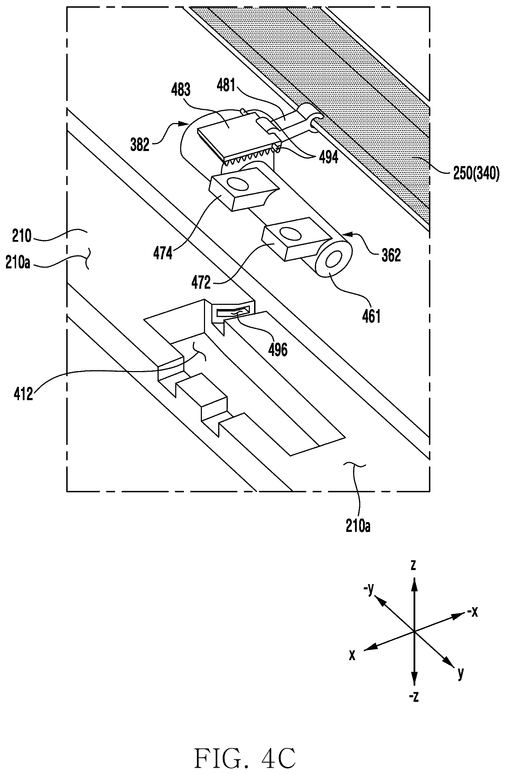

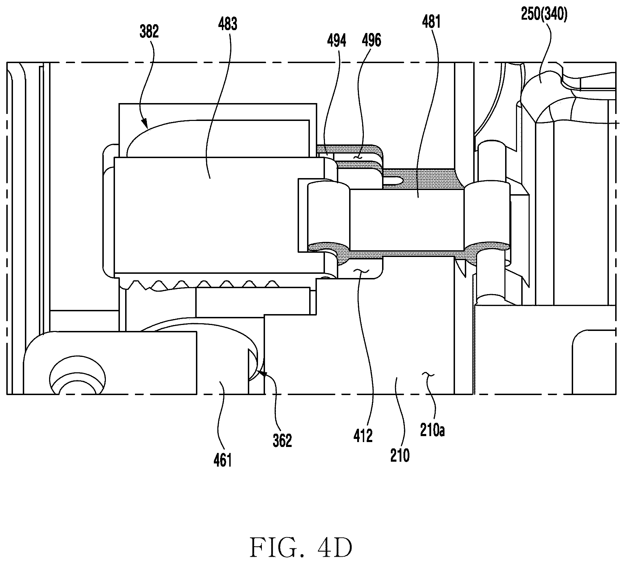

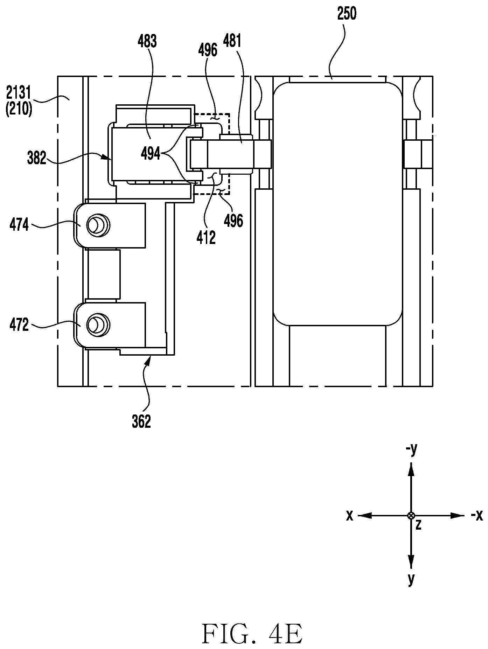

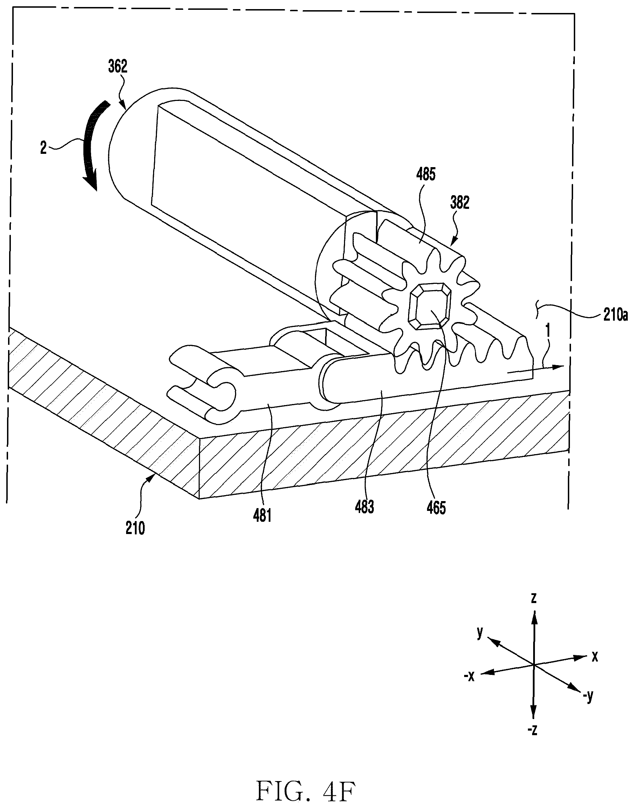

FIG. 4A is a drawing illustrating a first antenna assembly and a first link assembly according to an embodiment. FIG. 4B is a drawing illustrating a first antenna assembly, a first link assembly, and a hinge assembly according to an embodiment. FIG. 4C is an exploded view of a first antenna assembly, a first link assembly, a hinge assembly, and a first housing according to an embodiment. FIG. 4D and FIG. 4E are drawings illustrating a first antenna assembly, a first link assembly, a hinge assembly, and a first housing according to an embodiment. FIG. 4F is a drawing illustrating a first antenna assembly, and a first link according to an embodiment.

Referring to FIGS. 4A and 4B, a first antenna assembly 362 according to an embodiment may include a first antenna housing 461, a first antenna module 463, and a first shaft 465. In an embodiment, a first link assembly 382 may include a first link 481, a first rack gear 483, a first pinion gear 485, a second pinion gear 487, and a first bracket 489.

The first antenna module 463 may be located in the first antenna housing 461. The first shaft 465 may be fixedly coupled to the first antenna module 463. The first antenna module 463 may be rotatably coupled to the first antenna housing 461. For example, the first antenna module 463 and/or the first shaft 465 may be coupled to the first antenna housing 461 through a mechanical element such as a bearing capable of reducing friction in a relative motion with the first antenna housing 461 while supporting the first antenna module 463 and/or the first shaft 465. However, a mechanism for rotatably coupling the first antenna module 463 to the first antenna housing 461 is not limited by the above-described example.

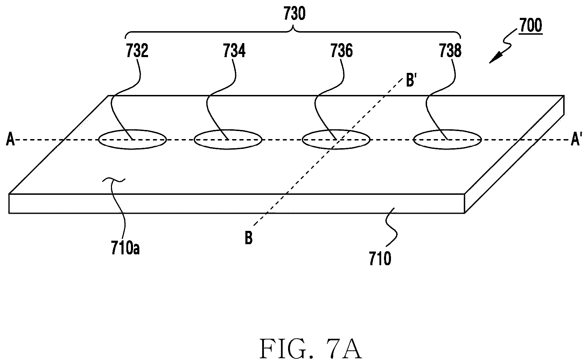

The first antenna housing 461 may be configured not to inhibit radio wave radiation of the first antenna module 463. For example, at least a portion of the first antenna housing 461 may be formed of a material through which an RF signal may be penetrated. For example, the at least a portion of the first antenna housing 461 may be formed to have non-conductivity and/or low dielectric constant. For example, the at least a portion of the first antenna housing 461 may include a material (e.g., plastic) having the non-conductivity and/or the low dielectric constant. For another example, in the first antenna housing 461, an opening 467 aligned on or at least partially overlapping a radiation surface (e.g., a first surface 710a of FIG. 7A) of the first antenna module 463 may be formed.

The first shaft 465 may extend from the first antenna module 463 inside the first antenna housing 461, through the first antenna housing 461, to the outside of the first antenna housing 461. The first pinion gear 485 may be coupled to the first shaft 465. For example, the first pinion gear 485 may be coupled to a distal end portion of the first shaft 465 outside the first antenna housing 461. Rotation of the first pinion gear 485 may be linked with rotation of the first antenna module 463 through the first shaft 465.

The first link 481 may be coupled to the hinge assembly 340 and the first rack gear 483. For example, a first distal end portion of the first link 481 may be rotatably coupled to the hinge cover 250, and a second distal end portion opposite the first distal end portion may be rotatably coupled to the first rack gear 483.

The first rack gear 483 may be coupled to the second pinion gear 487. The second pinion gear 487 may rotate by a linear movement of the first rack gear 483. The second pinion gear 487 may be coupled to the first pinion gear 485. By the rotation of the second pinion gear 487, the first pinion gear 485 may rotate in an opposite direction to the second pinion gear 487. The movement of the first rack gear 483 may cause rotation of the first antenna module 463. For example, in case that the first rack gear 483 moves in a first direction 1 (e.g., +x direction), the first antenna module 463 may rotate in a second direction 2 through the second pinion gear 487, the first pinion gear 485, and the first shaft 465. The second direction 2 may be a clockwise direction when viewed from a -y direction.

The first pinion gear 485 and the second pinion gear 487 may be located inside the first bracket 489. The second pinion gear 487 may be supported by the first bracket 489.

Referring to FIGS. 4C and 4E, the first antenna assembly 362 and the first link assembly 382 may be disposed in a first housing 210. For example, the first antenna assembly 362 and the first link assembly 382 may be disposed on a first surface 210a of the first housing 210. For example, the first antenna assembly 362 and the first link assembly 382 may be at least partially accommodated in a recess 412 formed on the first surface 210a of the first housing 210.

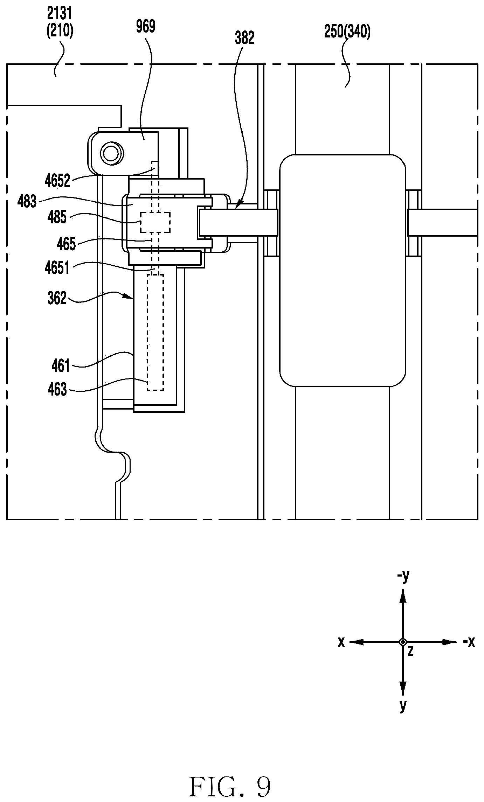

The first antenna housing 461 of the first antenna assembly 362 may be coupled to the first housing 210. For example, the first antenna assembly 362 may be coupled to the first housing 210 through coupling portions 472 and 474 connected to an exterior surface of the first antenna housing 461. For example, the first antenna housing 461 may be fixedly disposed in the first housing 210 through members such as a screw that penetrates the coupling portions 472 and 474 and is fastened to the first housing 210. However, it is not limited thereto, and the first antenna housing 461 may be spaced apart from the first housing 210 or may be rotatably coupled to the first housing 210. In this case, the first antenna module 463 may be configured to rotate together with the first antenna housing 461. This will be described later with reference to FIG. 9.

Referring to FIGS. 4C, 4D and 4E, the first rack gear 483 of the first link assembly 382 may be slidably coupled to the first housing 210. For example, the first rack gear 483 may include a feature such as a protrusion 494 formed on a lateral side of the first rack gear 483, and the first housing 210 may include a feature such as a groove 496 extending along a moving path of the first rack gear 483 to guide moving of the first rack gear 483 by receiving the protrusion 494, but is not limited thereto. The first rack gear 483 may sliding-move on the first housing 210 or in the recess 412 of the first housing 210. For example, the first rack gear 483 may move along a folding axis (e.g., the folding axis F of FIG. 2A) of the electronic device 200 or a direction perpendicular to a y axis (e.g., an x axis direction).

Referring to FIG. 4C, the first rack gear 483 may be disposed such that its teeth face the first housing 210. For example, the teeth of the first rack gear 483 may be located between a teeth root of the first rack gear 483 and the first housing 210. In this case, referring to FIG. 4B, one or more gears of the first link assembly 382 coupled between the first rack gear 483 and the first antenna module 463 may be configured with an even number of gears, like the first pinion gear 485 and the second pinion gear 487, in order for the first antenna module 463 to rotate in the second direction 2 when the first rack gear 483 moves in the first direction 1. Alternatively, referring to FIG. 4F, the first rack gear 483 may be disposed such that its teeth root faces the first housing 210. For example, the teeth root of the first rack gear 483 may be located between the teeth of the first rack gear 483 and the first housing 210. In this case, the one or more gears of the first link assembly 382 coupled between the first rack gear 483 and the first antenna module 463 may be configured with an odd number like the first pinion gear 485, in order for the first antenna module 463 to rotate in the second direction 2 when the first rack gear 483 moves in the first direction 1.

FIG. 5 is a drawing for describing an operation of an antenna assembly and a link mechanism according to an embodiment. FIG. 5 illustrates a third state between a first state in which an electronic device 200 is fully unfolded and a second state in which the electronic device 200 is fully folded.

Referring to FIG. 5, in an embodiment, in order for the electronic device 200 to change from the first state to the second state, a first housing 210 may rotate with respect to a second housing 220. For example, the first housing 210 may rotate a counterclockwise direction C1 based on at least one first axis parallel to a y axis.

By the rotation of the first housing 210, a first link 481 may rotate with respect to a hinge cover 250. For example, the first link 481 may rotate the counterclockwise direction C1 based on an axis parallel to the y axis. A rotation path (e.g., a rotation axis and/or a rotation radius) of the first link 481 with respect to the hinge cover 250 may be different from a rotation path of the first housing 210 with respect to the second housing 220. While the first housing 210 is rotating, the first link 481 may cause a sliding movement of the first rack gear 483 by rotating in a different path from the first housing 210. For example, while the first housing 210 rotates the counterclockwise direction C1, the first rack gear 483 may move in a direction B1 that is perpendicular to the rotation axis of the first housing 210 or the first link 481 and faces the hinge cover 250.

As the first rack gear 483 moves in the direction B1, the second pinion gear 487 coupled to the first rack gear 483 may rotate the counterclockwise direction, and the first pinion gear 485 coupled to the second pinion gear 487 may rotate the clockwise direction. Accordingly, the first antenna module 463 coupled to the first pinion gear 485 through the first shaft 465 may rotate in a clockwise direction R1.

According to an embodiment, a second antenna assembly 364 may include a second antenna housing 561, a second antenna module 563, and a second shaft 565. According to an embodiment, a second link assembly 384 may include a second link 581, a second rack gear 583, a third pinion gear 585, a fourth pinion gear 587, and a second bracket 589.

The above description of the first antenna assembly 362 and the first link assembly 382 may be applied in substantially the same and/or corresponding manner to the second antenna assembly 364 and the second link assembly 384 of FIG. 3A. For example, the second antenna assembly 364 and the second link assembly 384 may be symmetrically configured with the first antenna assembly 362 and the first link assembly 382 based on the hinge cover 250.

For example, the second antenna assembly 364 and the second link assembly 384 may be disposed in the second housing 220. For example, the second antenna assembly 364 and the first link assembly 382 may be at least partially accommodated in a recess (e.g., a recess 412 of FIG. 4E) of the second housing 220. For example, the second antenna housing 561 of the second antenna assembly 364 may be fixedly or rotatably coupled to the second housing 220.

For example, the second antenna module 563 may be located in the second antenna housing 561. The second antenna module 563 may be configured to rotate with the second antenna housing 561 or to rotate in the second antenna housing 561.

For example, the second link 581 may be rotatably coupled to the hinge cover 250 on an opposite side of the first link 481 of the first link assembly 382. For example, the second rack gear 583 may be slidably coupled to the second housing 220. For example, the second rack gear 583 may slide on the second housing 220 or in the recess of the second housing 220.

In an embodiment, in order for the electronic device 200 to change from the first state to the second state, the second housing 220 may rotate with respect to the first housing 210. For example, the second housing 220 may rotate in a clockwise direction C2 with respect to at least one second axis parallel to the y axis.

By the rotation of the second housing 220, the second link 581 may rotate with respect to the hinge cover 250. For example, the second link 581 may rotate the clockwise direction C2 based on the axis parallel to the y axis. A rotation path (e.g., a rotation axis and/or a rotation radius) of the second link 581 with respect to the hinge cover 250 may be different from a rotation path of the second housing 220 with respect to the first housing 210. While the second housing 220 is rotating, the second link 581 may cause a sliding movement of the second rack gear 583 by rotating in a different path from the second housing 220. For example, while the second housing 220 is rotating in the clockwise direction C1, the second rack gear 583 may move in a direction B2 that is perpendicular to the rotation axis of the second housing 220 and faces the hinge cover 250.

As the second rack gear 583 moves in the direction B2, the fourth pinion gear 587 coupled to the second rack gear 583 may rotate in the clockwise direction, and the third pinion gear 585 coupled to the fourth pinion gear 587 may rotate in the counterclockwise direction. Accordingly, the second antenna module 563 coupled to the third pinion gear 585 through the second shaft 565 may rotate in a counterclockwise direction R2.

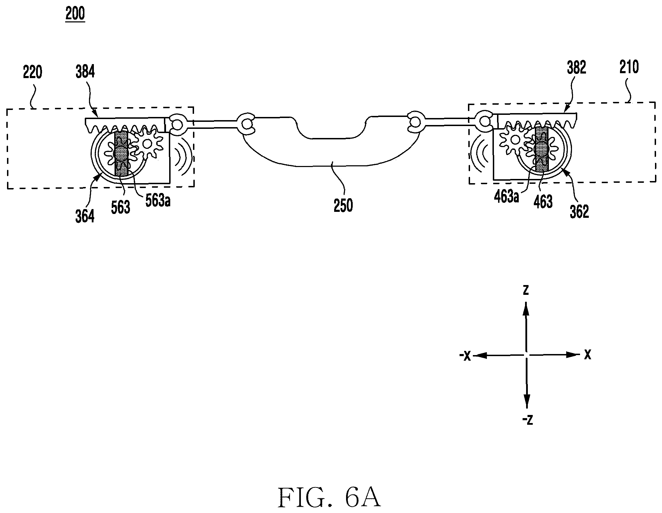

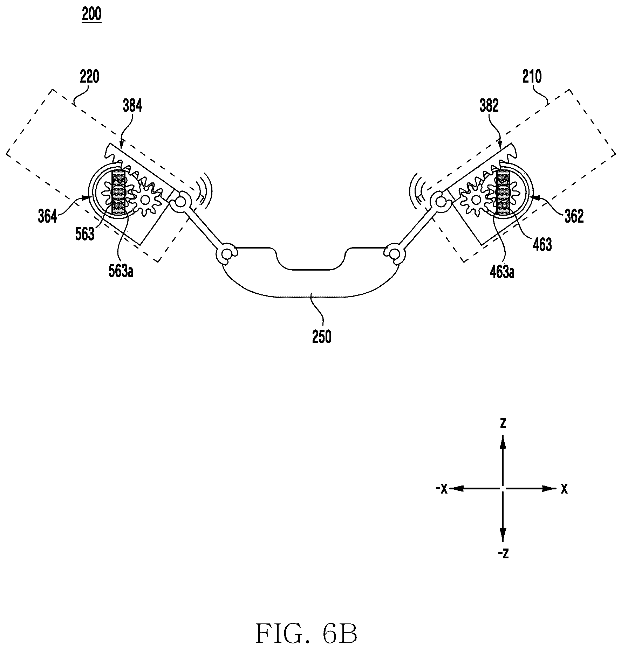

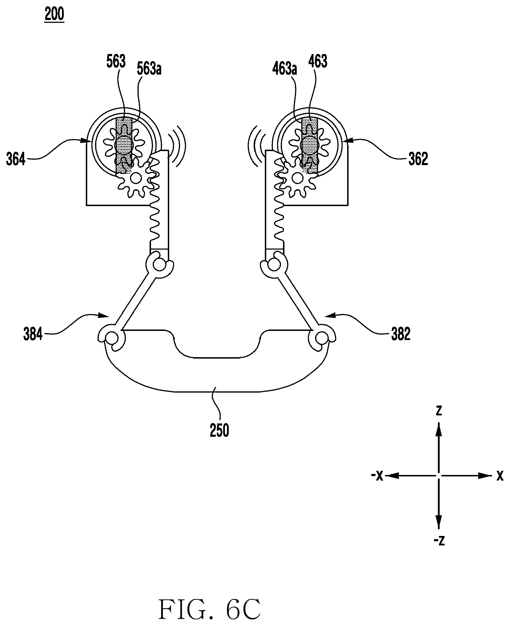

FIG. 6A illustrates an electronic device in a first state according to an embodiment. FIG. 6B illustrates an electronic device in a third state according to an embodiment. FIG. 6C illustrates an electronic device in a second state according to an embodiment.

Referring to FIGS. 6A, 6B, and 6C, according to an embodiment, a first link assembly 382 may rotate a first antenna module 463 such that the first antenna module 463 faces a second antenna module 563 while a first housing 210 rotates with respect to a second housing 220. Accordingly, regardless of a state of an electronic device 200 or an arrangement configuration of the first housing 210 and the second housing 220 accordingly, the first antenna module 463 may face the second antenna module 563. For example, regardless of the state of the electronic device 200, a radiation surface 463a (e.g., a first surface 710a of FIG. 7A) of the first antenna module 463 may face the second antenna module 563. For example, regardless of the state of the electronic device 200, a radiation pattern or a main beam of the first antenna module 463 may face the second antenna module 563.

According to an embodiment, a second link assembly 384 may rotate the second antenna module 563 such that the second antenna module 563 faces the first antenna module 463 while the second housing 220 rotates with respect to the first housing 210. Accordingly, regardless of the state of the electronic device 200 or the arrangement configuration of the first housing 210 and the second housing 220 accordingly, the second antenna module 563 may face the first antenna module 463. For example, regardless of the state of the electronic device 200, a radiation surface 563a (e.g., a first surface 710a of FIG. 7A) of the second antenna module 563 may face the first antenna module 463. For example, regardless of the state of the electronic device 200, a radiation pattern or a main beam of the second antenna module 563 may face the first antenna module 463.

While the state of the electronic device 200 is changed, an alignment relationship between the first antenna module 463 and the second antenna module 563 may be maintained substantially the same by the first link assembly 382 and the second link assembly 384. Accordingly, it is possible to prevent a wireless communication environment between the first antenna module 463 and the second antenna module 563 from being changed due to the state change of the electronic device 200.

The first link assembly 382 and/or the second link assembly 384 may be referred to as a rotating assembly, a rotating device, a link device, a linkage assembly, a linkage device, or a linkage mechanism.

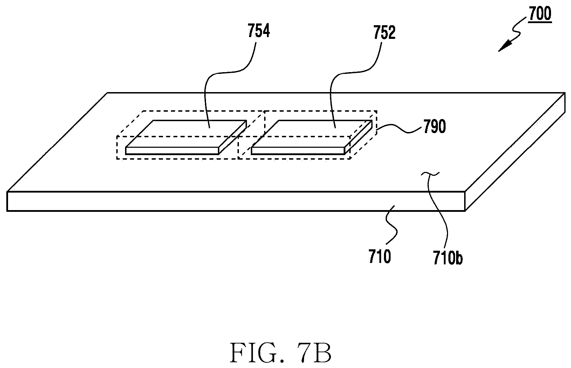

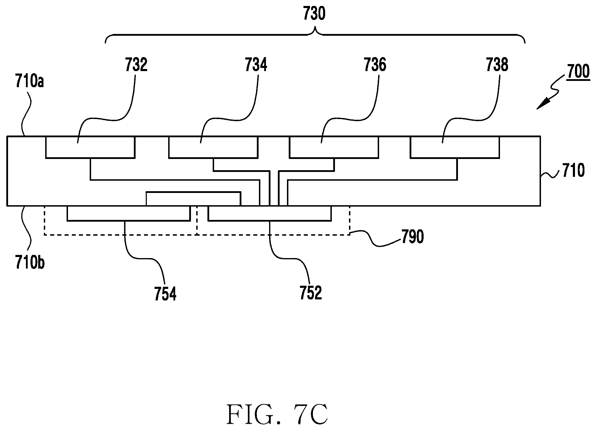

FIG. 7A is a drawing illustrating an upper surface of an antenna module according to an embodiment, FIG. 7B is a drawing illustrating a rear surface of an antenna module according to an embodiment, and FIG. 7C is a drawing illustrating a cross section of an antenna module according to an embodiment. FIG. 7C illustrates a cross section for line A-A' of an antenna module 700 of FIG. 7A.

Referring to FIGS. 7A, 7B, and 7C, in an embodiment, the antenna module 700 may include a printed circuit board 710, an antenna array 730, a radio frequency integrate circuit (RFIC) 752, a power manage integrate circuit (PMIC) 754, or a module interface (not illustrated). Selectively, the antenna module 700 may further include a shielding member 790. In an embodiment, at least one of components included in the antenna module 700 may be omitted, or at least two of the components included in the antenna module 700 may be integrally formed. In an embodiment, the antenna module 700 may be the same as the first antenna module 463 and/or the second antenna module 563.

The printed circuit board 710 may include a plurality of conductive layers and a plurality of non-conductive layers stacked alternately with the conductive layers. The printed circuit board 710 may provide an electrical connection between the printed circuit board 710 and/or various electronic components disposed outside, using wirings and conductive vias formed on the conductive layer.

The antenna array 730 may include a plurality of antenna elements 732, 734, 736, or 738 disposed to form a directional beam. The antenna elements may be formed on a first surface 710a of the printed circuit board 710, as illustrated. According to another embodiment, the antenna array 730 may be formed inside the printed circuit board 710. According to embodiments, the antenna array 730 may include the plurality of antenna arrays (e.g., a dipole antenna array and/or a patch antenna array) of the same or different shape and/or the same or different type.

The RFIC 752 may be disposed in another area (e.g., a second surface 710b opposite the first surface 710a) of the printed circuit board 710 spaced apart from the antenna array. The RFIC may be configured to process a signal of a selected frequency band transmitted and/or received through the antenna array 730. According to an embodiment, the RFIC 752 may convert a baseband signal obtained from a communication processor into an RF signal of a preset frequency band when transmitting. When receiving, the RFIC 752 may convert the RF signal received through the antenna array 730 into the baseband signal and transmit it to the communication processor.

According to another embodiment, when transmitting, the RFIC 752 may convert an IF signal (e.g., about 9GHz to about 11GHz) obtained from an intermediate frequency integrate circuitry (IFIC) into an RF signal of the selected frequency band. When receiving, the RFIC 752 may convert the RF signal obtained through the antenna array 730 into the IF signal and transmit it to the IFIC. The IFIC may be included in a wireless communication circuit (e.g., the wireless communication module 192 of FIG. 1) of the electronic device.

The PMIC 754 may be disposed in another partial area (e.g., the second surface 710b) of the printed circuit board 710 spaced apart from the antenna array 730. The PMIC 754 may receive voltage from a main PCB (not illustrated) and provide power required for various components (e.g., RFIC 752) on the antenna module.

The shielding member 790 may be disposed on a portion (e.g., the second surface 710b) of the printed circuit board 710 to electromagnetically shield at least one of the RFIC 752 and the PMIC 754. According to an embodiment, the shielding member 790 may include a shield can.

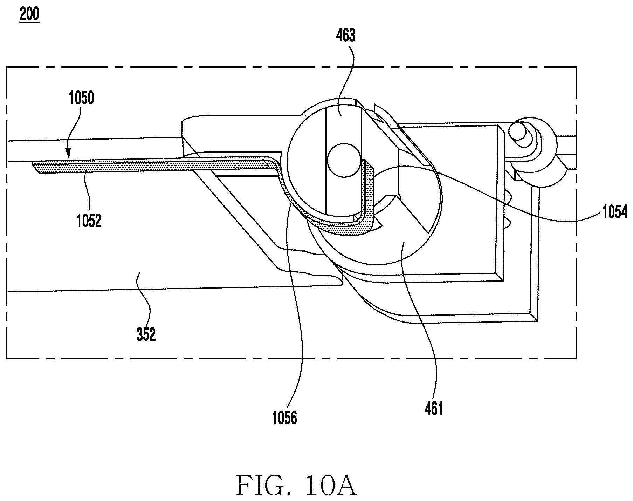

Although not illustrated, in various embodiments, the antenna module 700 may be electrically connected to another printed circuit board (e.g., a main PCB) through the module interface (e.g., a connecting member 1050 of FIG. 10A). For example, the module interface may include a connecting member, a coaxial cable connector, a board to board connector, an interposer, and/or a flexible printed circuit board (FPCB). Through the connecting member, the RFIC 752 and/or the PMIC 754 of the antenna module 700 may be electrically connected to the other printed circuit board.

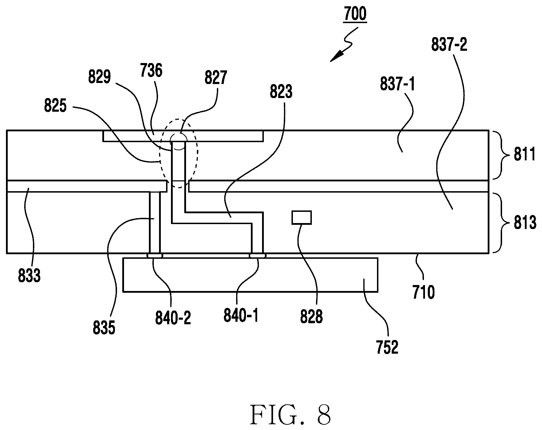

FIG. 8 illustrates a cross section for line B-B' of an antenna module 700 of FIG. 7A. A printed circuit board 710 of the illustrated embodiment may include an antenna layer 811 and a network layer 813.

The antenna layer 811 may include at least one dielectric layer 837-1 and an antenna element 736 and/or a feeding portion 825 formed on an outer surface of the dielectric layer 837-1 or inside the dielectric layer 837-1. For example, the feeding portion 825 may include a feeding point 827 and/or a feeding line 829. The at least one dielectric layer 837-1 may be a non-conductive layer. Although FIG. 8 illustrates that the antenna element 736 is disposed in the inside of the printed circuit board 710, it is not limited thereto. The antenna element 736 may be disposed on the outer surface of the dielectric layer 837-1 such that at least a portion thereof protrudes from the printed circuit board 710.

The network layer 813 may include at least one dielectric layer 837-2, at least one ground layer 833, at least one conductive via 835, a transmission line 823, and/or a signal line 828 formed on an outer surface of the dielectric layer 837-2 or inside the dielectric layer 837-2. The at least one dielectric layer 837-2 may be a non-conductive layer.

In addition, in an illustrated embodiment, for example, the RFIC 752 may be electrically connected to the network layer 813 through a first connecting portion 840-1 (solder bump) and the second connecting portion 840-2 (solder bump). In other embodiments, a various connection structure (e.g., soldering or BGA) may be used instead of a connecting portion. The RFIC 752 may be electrically connected to the antenna element 736 through the first connecting portion 840-1, the transmission line 823, and the feeding portion 825. The RFIC 752 may also be electrically connected to the ground layer 833 through the second connecting portion 840-2 and the conductive via 835. Although not illustrated, the RFIC 752 may also be electrically connected to the above-mentioned module interface through the signal line 829. In FIG. 8, the ground layer 833 is described as being disposed below the antenna layer 811 while forming a portion of the surface of the network layer 813, but a disposition location of the ground layer 833 is not limited thereto, and the ground layer 833 may be disposed on another layer in the printed circuit board 710.

FIG. 9 is a drawing illustrating a first antenna assembly, a first link assembly, a hinge assembly, and a first housing according to an embodiment.

Referring to FIG. 9, a first antenna housing 461 of a first antenna assembly 362 may be spaced apart from a first support member 2131 of a first housing 210. The first antenna housing 461 may rotate together with a first antenna module 463 through a first link assembly 382. For example, the first antenna housing 461 may be fixedly coupled to the first antenna module 463 and/or a first shaft 465 to be linked with rotation of a first pinion gear 485.

In an embodiment, the first antenna assembly 362 may further include a support bracket 969 disposed on the first housing 210. The support bracket 969 may be fixedly disposed on a first support member 2131 of the first housing 210. For example, the support bracket 969 may be coupled to the first support member 2131 through a fastening member such as a screw.

The support bracket 969 may be spaced apart from the first antenna housing 461, and the first link assembly 382 may be at least partially disposed therebetween. For example, a first rack gear 483 and the first pinion gear 485 of the first link assembly 382 may be positioned between the support bracket 969 and the first antenna housing 461.

The first shaft 465 may extend from the first antenna module 463, through the first pinion gear 485, to the inside of the support bracket 969. A first distal end 4651 of the first shaft 465 may be fixedly coupled to the first antenna module 463, and a second distal end 4652 may be rotatably coupled to the support bracket 969. Though the first antenna housing 461 is spaced apart from the first housing 210, it may be supported through the support bracket 969 and the first shaft 465 coupled thereto.

The description of the first antenna assembly 362 and the first link assembly 382 provided with reference to FIG. 9 may be applied in substantially the same and/or corresponding manner to the second antenna assembly 364 and the second link assembly 384 of FIG. 3A. For example, the second antenna assembly 364 and the second link assembly 384 may be symmetrically configured with the first antenna assembly 362 and the first link assembly 382 with respect to the hinge cover 250.

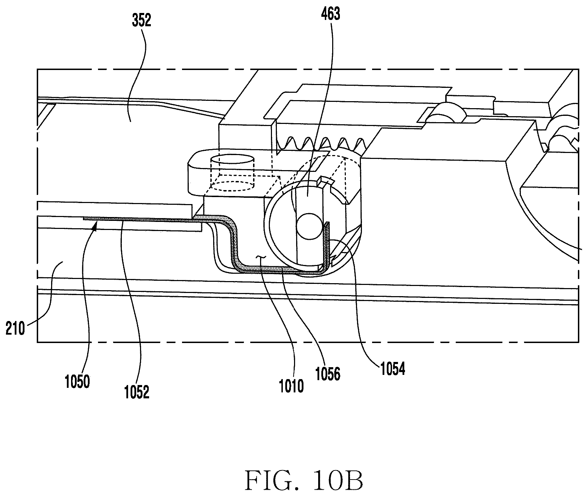

FIG. 10A and FIG. 10B are drawings illustrating an electronic device including a connecting member of an antenna module according to an embodiment.

Referring to FIGS. 10A and 10B, an electronic device 200 according to an embodiment may include a first connecting member 1050. The first connecting member 1050 may extend from a first substrate 352 to a first antenna module 463 by penetrating a first antenna housing 461. A wireless communication circuit (e.g., the first wireless communication circuit 322 of FIG. 3B) disposed on the first substrate 352 and the first antenna module 463 may be electrically connected through the first connecting member 1050.

For example, the first connecting member 1050 may include a flexible printed circuit board or a cable (e.g., a coaxial cable or a flexible RF cable (FRC)). It may be configured to accommodate a change in length due to rotation of the first antenna module 463. For example, the first connecting member 1050 may include a first portion 1052 connected to the first substrate 352, a second portion 1054 connected to the first antenna module 463, and a third portion 1056 extending from the first portion 1052 to the second portion 1054 and configured to be deformed according to the rotation of the first antenna module 463. The third portion 1056 may be located in a recess 1010 formed in the first housing 210. The third portion 1056 may extend along a periphery of the first antenna housing 461. The third portion 1056 may selectively contact the first antenna housing 461 while the first antenna module 463 rotates, but is not limited thereto.

Although not illustrated, the electronic device 200 may include a second connecting member for electrically connecting a second antenna module 563 and a second substrate 354. For the second connecting member, the above-described description of the first connecting member 1050 may be applied in substantially the same or corresponding manner.

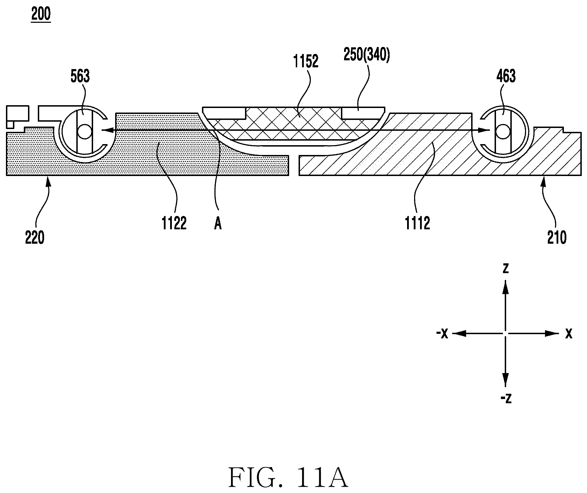

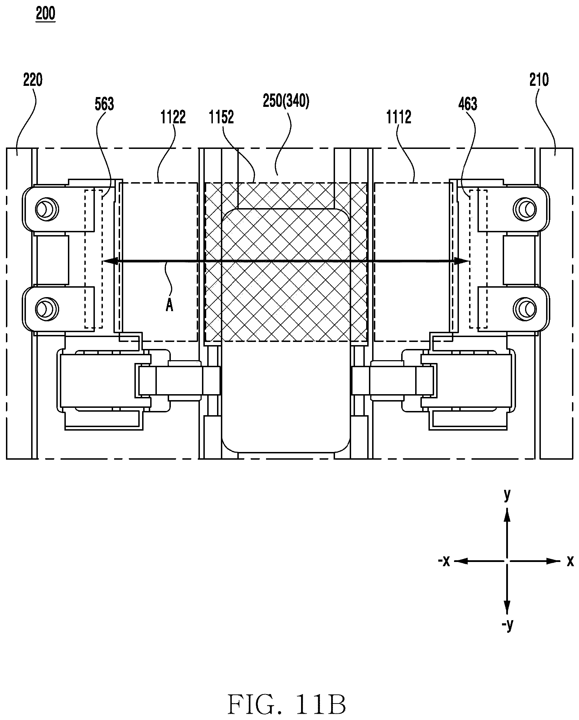

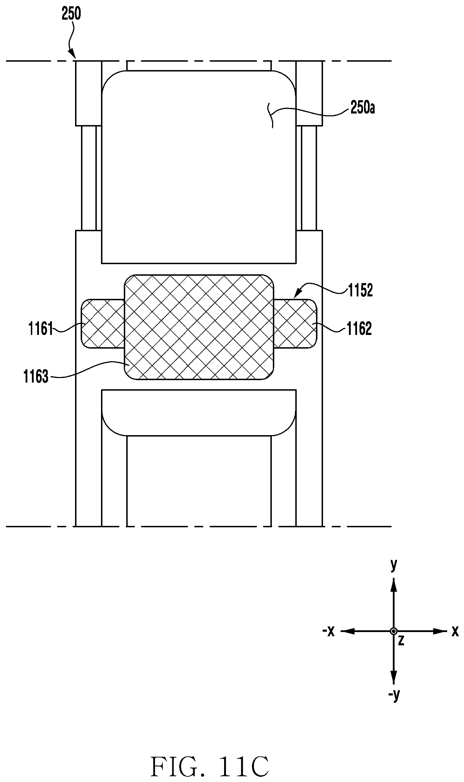

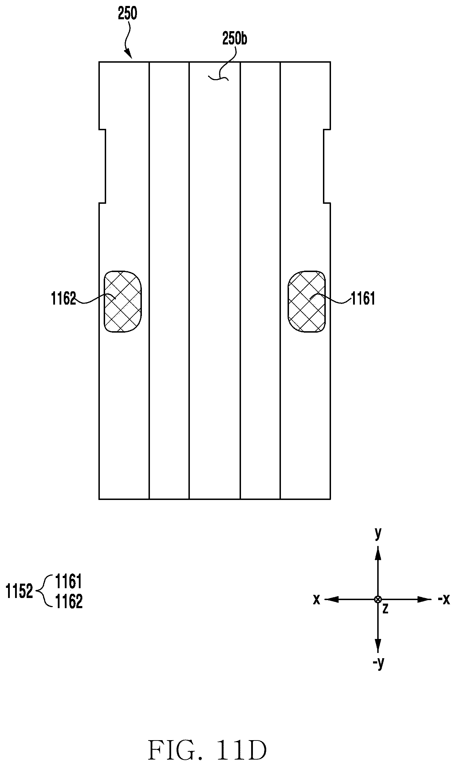

FIG. 11A and FIG. 11B are drawings illustrating an electronic device in a fully unfolded first state according to an embodiment. FIG. 11C and FIG. 11D are drawings illustrating a hinge cover of a hinge assembly according to an embodiment.

Referring to FIGS. 11A and 11B, in a first state in which the electronic device 200 is fully unfolded, a first housing 210 may include a portion 1112 overlapping a first antenna module 463 and a second antenna module 563. For example, in the first state, the portion 1112 of the first housing 210 may overlap the first antenna module 463 and the second antenna module 563 based on a direction (e.g., x axis). For example, a virtual path A passing through the first antenna module 463 and the second antenna module 563 may pass through the portion 1112 of the first housing 210.

In the first state, a second housing 220 may include a portion 1122 overlapping the first antenna module 463 and the second antenna module 563. For example, in the first state, the portion 1122 of the second housing 220 may overlap the first antenna module 463 and the second antenna module 563 based on a direction (e.g., x axis). For example, the virtual path A passing through the first antenna module 463 and the second antenna module 563 may pass through the portion 1122 of the second housing 220.

In the first state, a hinge cover 250 of a hinge assembly 340 may include a portion 1152 overlapping the first antenna module 463 and the second antenna module 563. For example, in the first state, the portion 1152 of the hinge cover 250 may overlap the first antenna module 463 and the second antenna module 563 based on a direction (e.g., x axis). For example, the virtual path A passing through the first antenna module 463 and the second antenna module 563 may pass through the portion 1152 of the hinge cover 250.

The portion 1112 of the first housing 210, the portion 1122 of the second housing 220, and the portion 1152 of the hinge cover 250 may be formed to have a non-conductive and/or low dielectric constant, such that a RF signal transmitted from the first antenna module 463 and the second antenna module 563 may be penetrated. The portion 1112 of the first housing 210, the portion 1122 of the second housing 220, and the portion 1152 of the hinge cover 250 may be formed of material (e.g., plastic) having a non-conductive and/or low dielectric constant.

Referring to FIGS. 11C and 11D, the hinge cover 250 may include an inner surface 250a facing the inside of the electronic device 200 and an outer surface 250b opposite to the inner surface 250a to face the outside of the electronic device 200.

The portion 1152 of the hinge cover 250 may include a first section 1161, a second section 1162, and a third section 1163 between the first section 1161 and the second section 1162, arranged along the virtual path A (e.g., the x axis). The third section 1163 may partially form the inner surface 250a of the hinge cover 250, and the first section 1161 and the second section 1162 may partially form the outer surface 250b of the hinge cover 250.

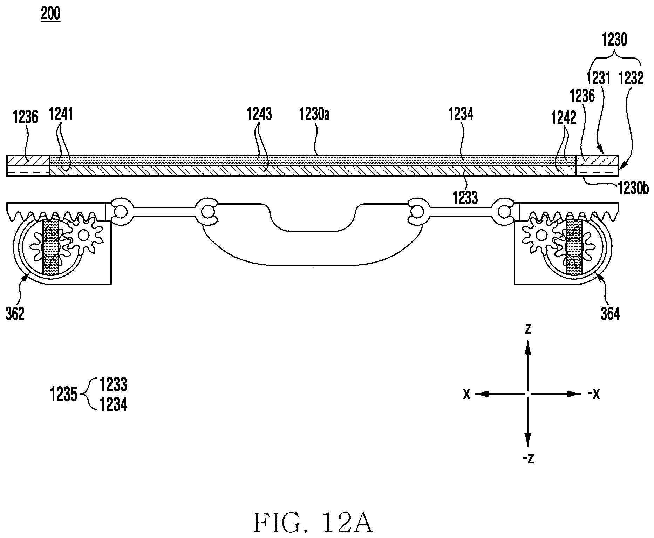

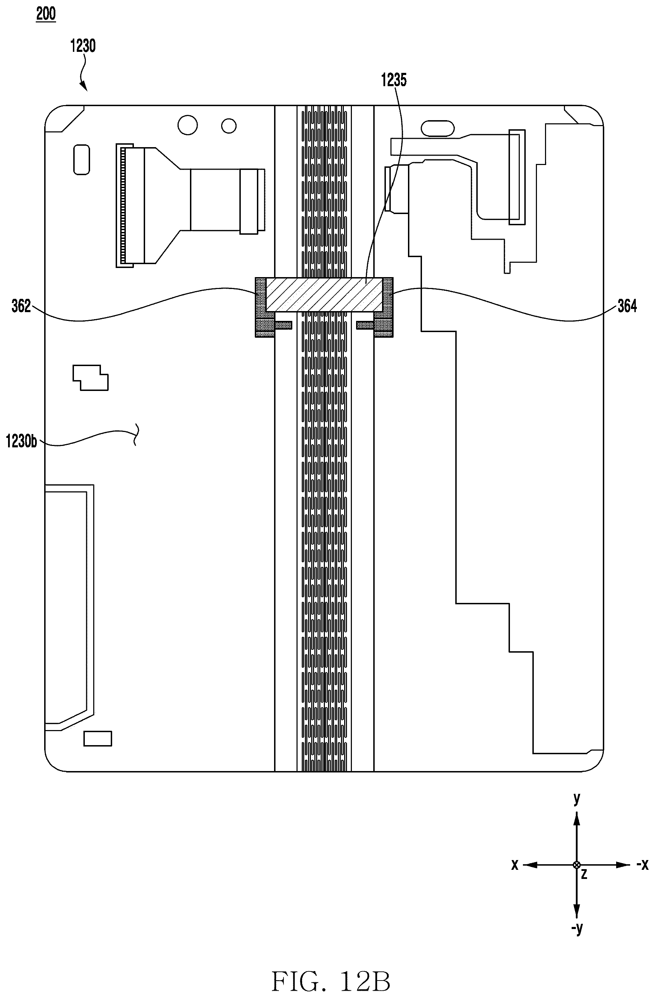

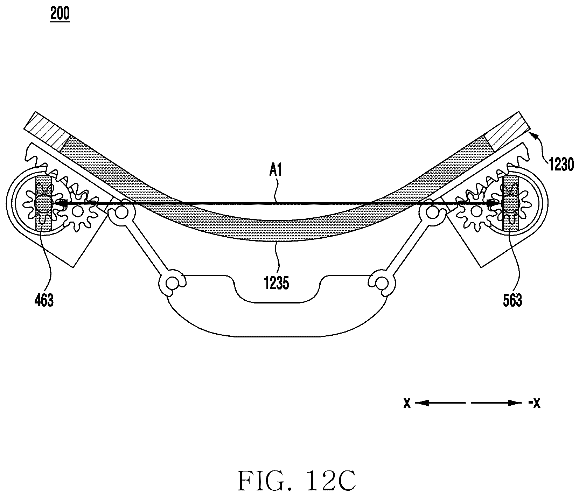

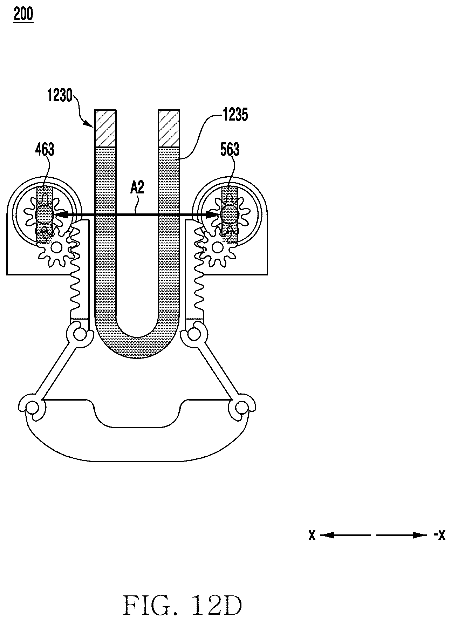

FIG. 12A illustrates an electronic device in a fully unfolded first state according to an embodiment. FIG. 12B illustrates a rear surface of a display according to an embodiment. FIG. 12C illustrates an electronic device in a third state which is an intermediate state according to an embodiment. FIG. 12D illustrates an electronic device in a fully folded second state according to an embodiment.

Referring to FIGS. 12A and 12B, an electronic device 200 according to an embodiment may include a display 1230 (e.g., the display 230 of FIG. 2A). The display 1230 may include a display panel 1231 and layers 1232 disposed under the display panel 1231. A front surface 1230a of the display 1230 may be formed by the display panel 1231, and a rear surface 1230b may be formed by at least a portion of a second layers 1230. The display panel 1231 may include pixels configured to emit light.

Layers 1232 may include one or more layers formed of a resin, a metal, composite material, or a combination thereof. For example, the layers 1232 may include a first protective layer disposed under the display panel 1231, a support layer disposed under the first protective layer, a second protective layer disposed under the support layer, and a shielding layer disposed under the second protective layer. For example, the first protective layer may include the resin such as polyimide. For example, the support layer may include a plate made of the metal such as stainless steel or plastic such as carbon fiber reinforced plastic to have rigidity that may support the display panel 1231. In addition, the support layer may include an area in which a plurality of openings or slits corresponding to a flexible section (e.g., the third area 230c of FIG. 2A) of the display 1230 are formed to facilitate folding of the flexible display panel 1231 according to change in a state of the electronic device 200. For example, the second protective layer may be formed from resin material such as thermolplastic polyurethane (TPU). The shielding layer may include the plate formed of the metal such as copper or a copper alloy to shield electromagnetic interference (EMI) with the display 1230 and/or to disperse heat of the display 1230. However, a configuration of the layers 1232 is not limited by the above-described example.

In an embodiment, the display 1230 may include an area 1235 including a portion 1234 of the display panel 1231 and/or a portion 1233 of the layers 1232.

In an embodiment, the portion 1234 of the display panel 1231 may have lower pixel density and/or wiring density than a peripheral portion 1236 of the portion 1234.

In an embodiment, the portion 1233 of the layers 1232 may be formed of material through which an RF signal may be penetrated. For example, the portion 1233 of the layers 1232 may be formed to have non-conductivity and/or low dielectric constant. Alternatively or optionally, at least the portion of the portion 1233 may be opened through the rear surface 1230b of the display 1230, or a hole partially penetrating the display 1230 may be formed in the portion 1233.

While the electronic device 200 is in a fully unfolded first state, the area 1235 of the display 1230 may at least partially overlap a first antenna assembly 362 and at least partially overlap a second antenna assembly 364. For example, in the first state, the area 1235 of the display 1230 may partially overlap the first antenna assembly 362, and may partially overlap the second antenna assembly 364, based on a direction perpendicular to the display 1230 (e.g., a z axis direction).

For example, the area 1235 of the display 1230 may include a first section 1241 overlapping the first antenna assembly 362, a second section 1242 overlapping the section antenna assembly 364, and a third section 1243 extending from the first section 1241 to the second section 1242.

Referring to FIG. 12C, while the electronic device 200 is in the third state, the area 1235 of the display 1230 may overlap a first antenna module 463 and a second antenna module 563 (e.g., based on the x axis direction). For example, in the third state, the virtual path A1 passing through the first antenna module 463 and the second antenna module 563 may pass through the area 1235 of the display 1230. Accordingly, in the third state, an effect of the layers 1232 on a wireless communication performance of the first antenna module 463 and the second antenna module 563 may be reduced.

Referring to FIG. 12D, while the electronic device 200 is in the second state, the area 1235 of the display 1230 may overlap the first antenna module 463 and the second antenna module 563 (e.g., based on the x axis direction). For example, in the second state, a virtual path A2 passing through the first antenna module 463 and the second antenna module 563 may pass through the area 1235 of the display 1230. Accordingly, in the second state, the effect of the layers 1232 on the wireless communication performance of the first antenna module 463 and the second antenna module 563 may be reduced.

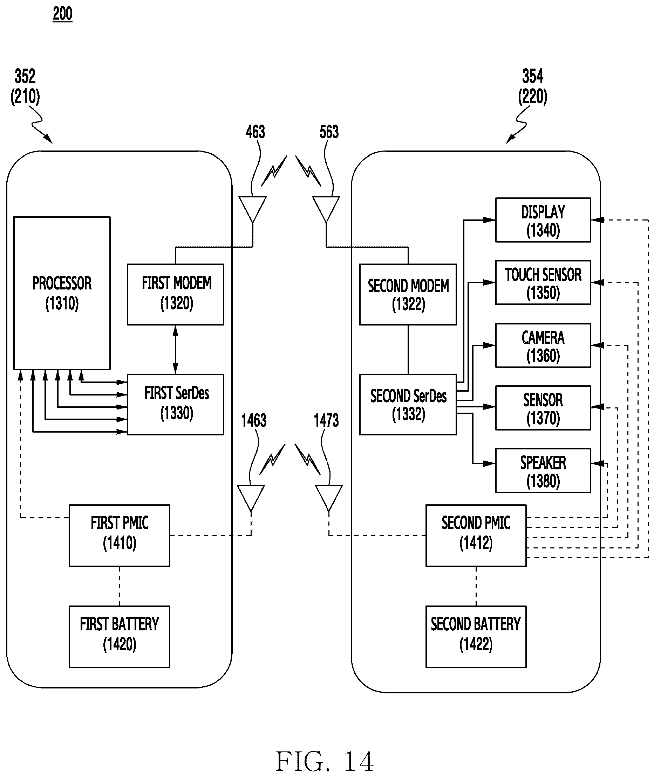

FIG. 13 and FIG. 14 are block diagrams of an electronic device according to an embodiment.

Referring to FIG. 13, an electronic device 200 according to an embodiment may include a processor 1310, a first SerDes 1330, and a first modem 1320, which are disposed on a first substrate 352 in a first housing 210. In an embodiment, the electronic device 200 may include a second modem 1322, a second SerDes 1332, a display 1340, a touch sensor 1350, a camera 1360, a sensor 1370, and a speaker 1380, which are disposed in a second housing 220. The second modem 1322 and the second SerDes 1332 may be disposed on a second substrate 354 in the second housing 220.

The processor 1310 may be an example of the processor 120 of FIG. 1. The processor 1310 may be operatively coupled or communicatively coupled with the first SerDes 1330, the first modem 1320, the second modem 1322, the second SerDes 1332, the display 1340, the touch sensor 1350, the camera 1360, the sensor 1370, and the speaker 1380.

The first SerDes 1330 and the second SerDes 1332 may include a circuit for aggregation and disaggregation of an input signal. For example, the first SerDes 1330 and the second SerDes 1332 may convert a plurality of signals (e.g., a parallel signal) into a signal (e.g., a serial signal), or convert a signal into the plurality of signals. The first SerDes 1330 or the second SerDes 1332 may be referred to as an SerDes integrated circuitry (IC) or an aggregation/disaggregation IC.

Each of the first modem 1320 and the second modem 1322 may be an example of the wireless communication module 192 of FIG. 1. The first modem 1320 and the second modem 1322 may be configured to be capable of performing wireless communication with each other.

For example, the first modem 1320 may include a first communication processor. The first communication processor may establish a wireless communication channel with the second modem 1322 through the first antenna module 463, and support the wireless communication through the established communication channel. The first modem 1320 may further include a first IFIC. In this case, the first IFIC may convert a baseband signal generated by the first communication processor into an RF signal (hereinafter referred to as an IF signal) of an intermediate frequency band (e.g., about 9GHz to about 11GHz) and then transmit it to the first antenna module 463. For example, the first IFIC may transfer the IF signal to the RFIC (e.g., the RFIC 752 of FIG. 8) of the first antenna module 463. The first modem 1320 may transmit the RF signal through the first antenna module 463. The RF signal received from the second modem 1322 through the first antenna module 463 may be converted into the IF signal by the RFIC of the first antenna module 463. The IFIC of the first modem 1320 may convert the IF signal into the baseband signal such that the first communication processor may process it. Alternatively or optionally, the IFIC of the first modem 1320 may be omitted or included in the RFIC as a portion of the RFIC of the first antenna module 463.

For example, the second modem 1322 may include a second communication processor. The second communication processor may establish a wireless communication channel with the first modem 1320 through the second antenna module 563, and support the wireless communication through the established communication channel. The second modem 1322 may further include a second IFIC. In this case, the second IFIC may convert a baseband signal generated by the second communication processor into an IF signal and then transfer it to the second antenna module 563. For example, the second IFIC may transfer the IF signal to the RFIC (e.g., the RFIC 752 of FIG. 8) of the second antenna module 563. The second modem 1322 may transmit the RF signal through the second antenna module 563. The RF signal received from the first modem 1320 through the second antenna module 563 may be converted into the IF signal by the RFIC of the second antenna module 563. The IFIC of the second modem 1322 may convert the IF signal into the baseband signal such that the second communication processor may process it. Alternatively or optionally, the IFIC of the second modem 1322 may be omitted or included in the RFIC as the portion of the RFIC of the second antenna module 563.

For example, for the wireless communication between the first modem 1320 and the second modem 1322, the RF signal in the 60 GHz band (e.g., 57 GHz to 66 GHz) may be used, but is not limited thereto.

Optionally, at least two of the first processor 1310, the first modem 1320, and the first SerDes 1330 may be integrated with each other. For example, the at least two of the first processor 1310, the first modem 1320, and the first SerDes 1330 may be implemented as a single chip or at least the portion of a single package. Optionally, the second modem 1322 and the second SerDes 1332 may be integrated with each other. For example, the second modem 1322 and the second SerDes 1332 may be implemented as a single chip or at least a portion of the single package.

In an embodiment, the processor 1310 may transmit and receive signals related to at least one of a plurality of components disposed in the second housing 220, such as the display 1340, the touch sensor 1350, the camera 1360, the sensor 1370, and the speaker 1380, using the first modem 1320 and the second modem 1322. For example, through the first antenna module 463 and the second antenna module 563, the processor 1310 may transmit and receive the signals related to the plurality of components disposed in the second housing 220. For example, the signals related to the plurality of components may include various signals such as a control signal, a driving signal, data (or a signal including data), and a timing signal.

For example, the processor 1310 may transmit the signals related to the plurality of components to the first SerDes 1330. The first SerDes 1330 may convert baseband signals related to the plurality of components into a single signal and transfer the converted signal to the first modem 1320. The first modem 1320 may transmit the RF signal modulated based on the signal transferred from the first SerDes 1330, through the first antenna module 463. The second modem 1322 may receive the RF signal from the first modem 1320, using the second antenna module 563. By demodulating the received RF signal, the second modem 1322 may transmit it to the second SerDes 1332. The second SerDes 1332 may convert the signal transferred from the second modem 1322 into the plurality of signals, and may transmit the converted signals to the plurality of components.

For example, the second SerDes 1332 may receive the signals related to the plurality of components, and convert them into a single signal. The second SerDes 1332 may transfer the converted single signal to the second SerDes 1332. The second modem 1322 may transmit the RF signal modulated based on the single signal transferred from the second SerDes 1332, through the second antenna module 563. The first modem 1320 may receive the RF signal from the second modem 1322, using the first antenna module 463. By demodulating the received RF signal, the first modem 1320 may transmit it to the first SerDes 1330. The first SerDes 1330 may convert the signal transferred from the first modem 1320 into the plurality of signals, and may transmit it to the processor 1310.

The skilled person appreciates that the various components shown to be part of the electronic device 200 in FIG. 13 are merely an embodiment. Other components may be present, and some components may be absent. The skilled person understands from FIG. 13 that one housing 210 may comprise the processor 1310 and first wireless communication functionality (e.g., the first modem 1320, the first SerDes 1330, and the first antenna module 463), while another housing 220 may comprise second wireless communication functionality (e.g., the second modem 1322, the second SerDes 1332, and the second antenna module 563) and one or more components (e.g. a display 1340, a touch sensor 1350, a camera 1360, a sensor 1370, and/or a speaker 1380), wherein the one or more components are controllable by the processor 1310 and/or may provide data to the processor 1310.

The processor 1310 may hence be configured to communicate with the components through the exchange of wireless communication signals between the first and second wireless communication functionalities. For example, the processor 1310 may send a signal via the first wireless communication functionality and the second wireless communication functionality to a component. The first wireless communication functionality transmits the signal, and the second wireless communication functionality receives the signal. For another example, the component may send a signal to the processor via the second wireless communication functionality and the first wireless communication functionality. The first wireless communication functionality receives the signal transmitted by the second wireless communication functionality.

Referring to FIG. 14, according to an embodiment, compared to FIG. 13, the electronic device 200 may further include a first PMIC 1410, a first battery 1420, and a third antenna module 1463, disposed in the first housing 210. The electronic device 200 may further include a second PMIC 1412, a second battery 1422, and a fourth antenna module 1473, disposed in the second housing 220. Each of the first PMIC 1410 and the second PMIC 1412 may be an example of the power management module 188 of FIG. 1. Each of the first battery 1420 and the second battery 1422 may be an example of the battery 189 of FIG. 1. The first battery 1420 may be an example of the first battery 392 of FIG. 3B. The second battery 1422 may be an example of the second battery 394 of FIG. 3B.

The processor 1310 may be operatively or communicatively coupled with the first PMIC 1410, the first battery 1420, the third antenna module 1463, the second PMIC 1412, the second battery 1422, and the fourth antenna module 1473.

Although not illustrated, the electronic device 200 may further include a third antenna assembly (e.g., the first antenna assembly 362 of FIG. 3A) including the third antenna module 1463, and a third link assembly (e.g., the first link assembly 382 of FIG. 3A) configured to rotate the third antenna module 1463 while the first housing 210 rotates.

Although not illustrated, the electronic device 200 may further include a fourth antenna assembly (e.g., the second antenna assembly 364 of FIG. 3A) including the fourth antenna module 1473, and a fourth link assembly (e.g., the second link assembly 384 of FIG. 3A) configured to rotate the fourth antenna module 1473 while the second housing 220 rotates.

In an embodiment, the third antenna module 1463 and the fourth antenna module 1473 may be configured to enable wireless power transmission. For example, each of the third antenna module 1463 and the fourth antenna module 1473 may include an antenna element for transmitting or receiving the wireless power according to a magnetic induction method or a magnetic resonance method.

The third link assembly may rotate the third antenna module 1463 such that the antenna element of the third antenna module 1463 faces the fourth antenna module 1473, while the first housing 210 rotates with respect to the second housing 220. The fourth link assembly may rotate the fourth antenna module 1473 such that the antenna element of the fourth antenna module 1473 faces the third antenna module 1463 while the second housing 220 rotates with respect to the first housing 210.

By converting power stored in the first battery 1420, the first PMIC 1410 may provide the power necessary for an operation of various components (e.g., the processor 1310) in the first housing 210. By converting power stored in the second battery 1422, the second PMIC 1412 may provide the power necessary for an operation of various components (e.g., the display 1340, the touch sensor 1350, the camera 1360, the sensor 1370, and the speaker 1380) in the second housing 220.

In an embodiment, the processor 1310 may transmit and receive a power signal between components in the first housing 210 and components in the second housing 220, using the third antenna module 1463 and the fourth antenna module 1473.

For example, by converting the power stored in the first battery 1420, the first PMIC 1410 may transmit it to the third antenna module 1463. The third antenna module 1463 may transmit the power signal transferred from the first PMIC 1410 to the fourth antenna module 1473. The fourth antenna module 1473 may transfer the power signal received from the third antenna module 1463 to the second PMIC 1412. The second PMIC 1412 may transfer the power signal received from the fourth antenna module 1473 to the various components in the second housing 220. For example, the second PMIC 1412 may provide the power necessary for the operation of the display 1340, the touch sensor 1350, the camera 1360, the sensor 1370, and the speaker 1380 based on the power signal received from the fourth antenna module 1473. For example, the second PMIC 1412 may convert the power signal received from the fourth antenna module 1473 and provide it to the second battery 1422, in order to charge the second battery 1422.

For example, by converting the power stored in the second battery 1422, the second PMIC 1412 may transfer it to the fourth antenna module 1473. The fourth antenna module 1473 may transmit the power signal transferred from the second PMIC 1412 to the third antenna module 1463. The third antenna module 1463 may transfer the power signal received from the fourth antenna module 1473 to the first PMIC 1410. The first PMIC 1410 may transfer the power signal received from the third antenna module 1463 to the various components in the first housing 210. For example, the first PMIC 1410 may provide the power necessary for the operation of the processor 1310 based on the power signal received from the third antenna module 1463. For example, the first PMIC 410 may convert the power signal received from the third antenna module 1463 and provide it to the first battery 1420, in order to charge the first battery 1420.

In a comparative example, signals between the components of the first housing 210 and the components of the second housing 220 may be transferred, using connecting members (e.g., a flexible circuit board) extending from the first housing 210, across a hinge assembly (e.g., the hinge assembly 340 of FIG. 3A), to the second housing 220. However, in order to mount these connecting members in the electronic device 200, a complex structure may be required, and assembly and disassembly may be difficult. In addition, the connecting member between the first housing 210 and the second housing 220 may be damaged due to an external impact of the electronic device 200. Furthermore, the requirements on the connecting member may limit the way in which components may be distributed between the first housing 210 and the second housing 220. The electronic device 200 according to an embodiment may not include the connecting member extending across the hinge assembly as in the comparative example. The electronic device 200 may transmit the signals between the components in the first housing 210 and the components in the second housing 220 through the wireless communication using the first antenna module 463 and the second antenna module 563. Accordingly, a problem of the above-described comparative example may be solved.

In addition, although the electronic device 200 is folded or unfolded, by rotating the first antenna module 463 and the second antenna module 563 to face each other, a change in communication performance between the first antenna module 463 and the second antenna module 563 depending on a state of the electronic device 200 may be reduced. That is, irrespective of whether the device is folded or not, the first antenna module 463 and the second antenna module 563 are oriented the same relative to each other, which may allow for a consistent communication performance between the housings.

In addition, although the electronic device 200 is folded or unfolded, by rotating the third antenna module 1463 and the fourth antenna module 1473 to face each other, a change in communication performance between the third antenna module 1463 and the fourth antenna module 1473 according to a state of the electronic device 200 may be reduced. That is, irrespective of whether the device is folded or not, the third antenna module 1463 and the fourth antenna module 1473 are oriented the same relative to each other, which may allow for efficiently transmitting power between the housings in either the folded or the unfolded state.

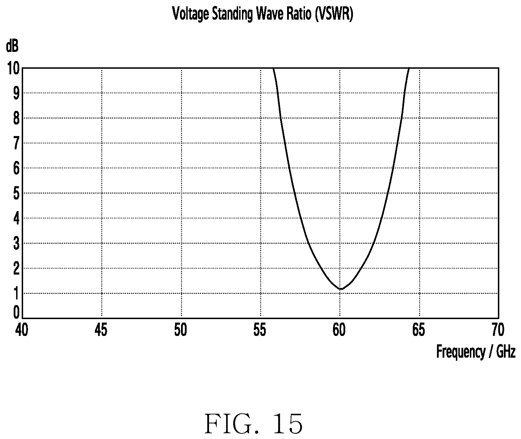

FIG. 15 is a graph illustrating a voltage standing wave ratio (VSWR) of an antenna module according to an embodiment. FIG. 15 illustrates the voltage standing wave ratio of the antenna module (e.g., the first antenna module 463 and the second antenna module 563 of FIG. 5) whose resonant frequency is set to 60 GHz. Referring to FIG. 15, the voltage standing wave ratio of the antenna module may be about 1.2:1 at 60 GHz. Although not illustrated, radiation peak efficiency of the antenna module may be about -3dB.

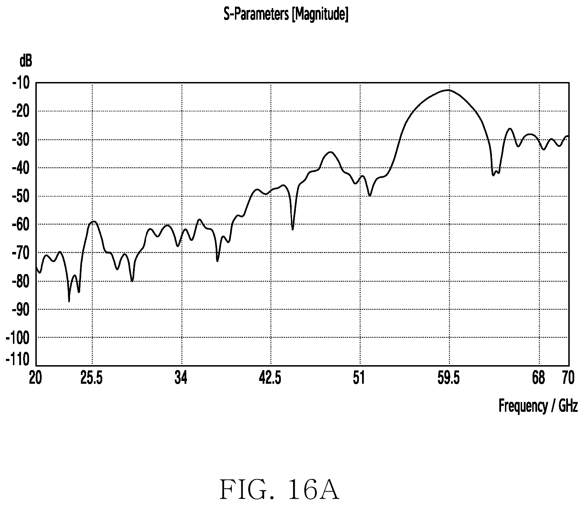

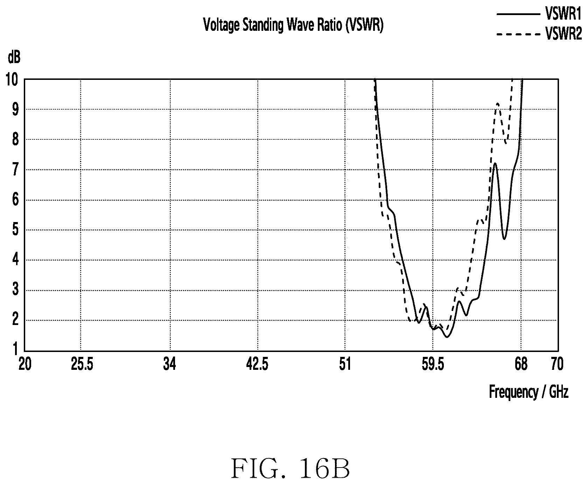

FIG. 16A is a graph illustrating an S parameter S21 of an antenna module of an electronic device in a folded state according to an embodiment. FIG. 16B is a graph illustrating a voltage standing wave ratio (VSWR) of an antenna module of an electronic device in a folded state according to an embodiment. FIGS. 16A and 16B illustrate the S parameter S21 and the voltage standing wave ratio in case that the antenna module of FIG. 15 is applied to the first antenna module 463 and the second antenna module 563 of the electronic device 200 in the second state of FIG. 6C.

Referring to FIG. 16A, in the second state, the S parameter S21 of the antenna module of the electronic device 200 may be about -14dB. Referring to FIG. 16B, in the second state, the voltage standing wave ratio of the antenna module of the electronic device 200 may be about 1.7:1.

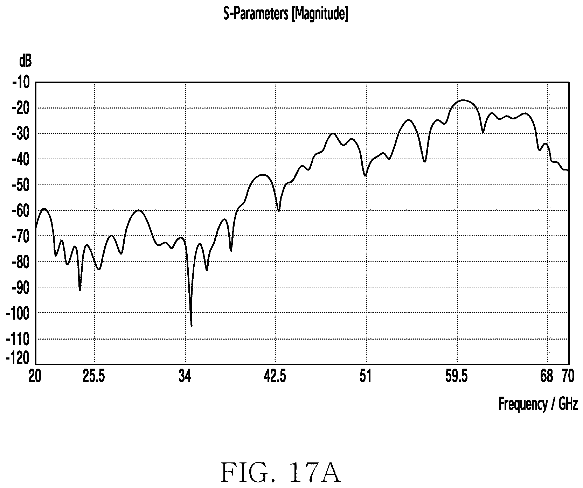

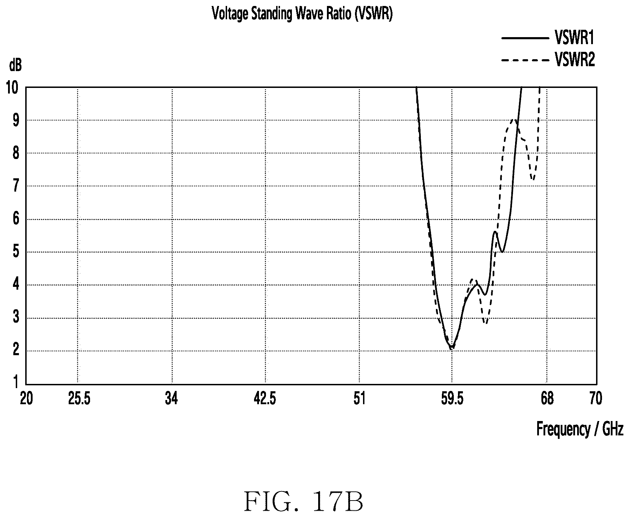

FIG. 17A is a graph illustrating an S parameter S21 of an antenna module of an electronic device in an unfolded state according to an embodiment. FIG. 17B is a graph illustrating a voltage standing wave ratio (VSWR) of an antenna module of an electronic device in an unfolded state according to an embodiment. FIGS. 17A and 17B illustrate the S parameter S21 and the voltage constant wave ratio in case that the antenna module of FIG. 15 is applied to the first antenna module 463 and the second antenna module 563 of the electronic device 200 in the first state of FIG. 6A.

Referring to FIG. 17A, in the first state, the S parameter S21 of the antenna module of the electronic device 200 may be about -17dB. Referring to FIG. 17B, in the first state, the voltage standing wave ratio of the antenna module of the electronic device 200 may be about 2.1:1.

In case of a wireless communication module in a 60 GHz band, a required reception sensitivity (Rx sensitivity) may be about level -25dBm, and output power may be about level 0dBm. As illustrated in FIGS. 16A, 16B, 17A, and 17B, in the first state and the second state of the electronic device 200, characteristics of the antenna module may be maintained substantially the same or similar. In addition, even in the first state in which a distance between the antenna modules is the farthest, the S parameter S21 value of the antenna module may be -17dB, which may be a level at which there is no problem at all in restoring the signal at a receiving end.

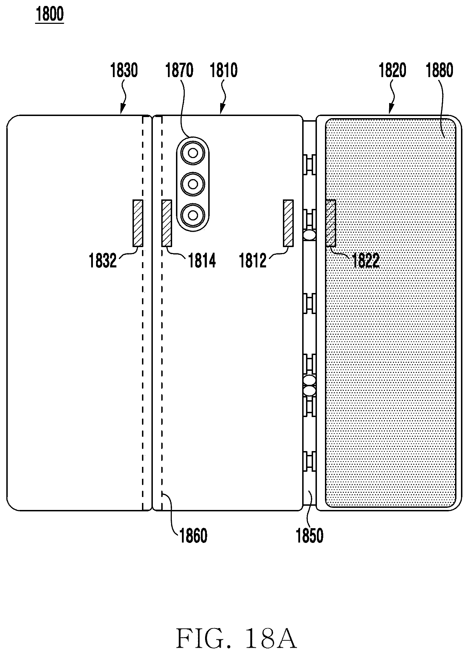

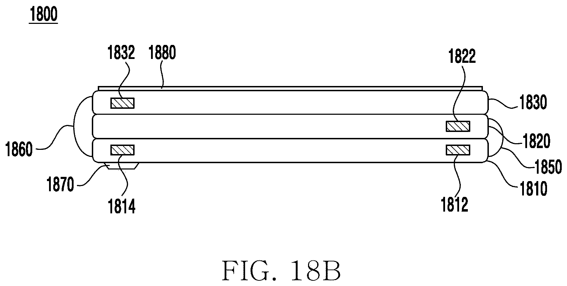

FIG. 18A illustrates an electronic device in an unfolded state according to an embodiment. FIG. 18B illustrates an electronic device in a folded state according to an embodiment.

Referring to FIGS. 18A and 18B, an electronic device 1800 (e.g., the electronic device 101 of FIG. 1 or the electronic device 200 of FIG. 13) according to an embodiment may include a first housing 1810 (e.g., the first housing 210 of FIG. 3A), a second housing 1820 (e.g., the second housing 220 of FIG. 3A), and a third housing 1830 (e.g., the second housing 220 of FIG. 3A), a first hinge assembly 1850 (e.g., the hinge assembly 340 of FIG. 3A), and a second hinge assembly 1860 (e.g., the hinge assembly 340 of FIG. 3A). In an embodiment, the electronic device 1800 may include a camera module 1870 (e.g., the second camera module 208 of FIG. 2B) exposed through a surface of the first housing 1810 by being disposed in the first housing 1810, and a display 1880 (e.g., the second display 231 of FIG. 2B) disposed in the second housing 1820 to be seen from the outside.

In an embodiment, the electronic device 1800 may include a first antenna module 1812 and a second antenna module 1814 disposed in the first housing 1810, a third antenna module 1822 disposed in the second housing 1820, and a fourth antenna module 1832 disposed in the third housing 1830. The first antenna module 1812 may be located adjacent to the second housing 1820, and the third antenna module 1822 may be located adjacent to the first housing 1810. The first antenna module 1812 and the third antenna module 1822 may be disposed to face each other. The second antenna module 1814 may be located adjacent to the third housing 1830, and the fourth antenna module 1832 may be located adjacent to the first housing 1810. The second antenna module 1814 and the fourth antenna module 1832 may be disposed to face each other.

Referring to FIG. 18A, in a state (e.g., a first state) in which the electronic device 1800 is unfolded, the first housing 1810 may be disposed between the second housing 1820 and the third housing 1830. The second housing 1820 may be rotatably coupled to a side of the first housing 1810 through the first hinge assembly 1850, and the third housing 1830 may be rotatably coupled to another side of the first housing 1810 through the second hinge assembly 1860.

Referring to FIG. 18B, the second housing 1820 may be overlain on the first housing 1810, and the third housing 1830 may be overlain on the second housing 1820 in a state (e.g., the second state) in which the electronic device 1800 is folded.

Although not illustrated, the electronic device 1800 may include link assemblies (e.g., the first link assembly 382 or the second link assembly 384 of FIG. 3A) configured to rotate antenna modules 1812, 1814, 1822, and 1832, respectively. Accordingly, while the first housing 1810 rotates with respect to the second housing 1820, the first antenna module 1812 may rotate to face the third antenna module 1822. While the first housing 1810 rotates with respect to the third housing 1830, the second antenna module 1814 may rotate to face the fourth antenna module 1832. While the second housing 1820 rotates with respect to the first housing 1810, the third antenna module 1822 may rotate to face the first antenna module 1812. While the third housing 1830 rotates with respect to the first housing 1810, the fourth antenna module 1832 may rotate to face the second antenna module 1814.

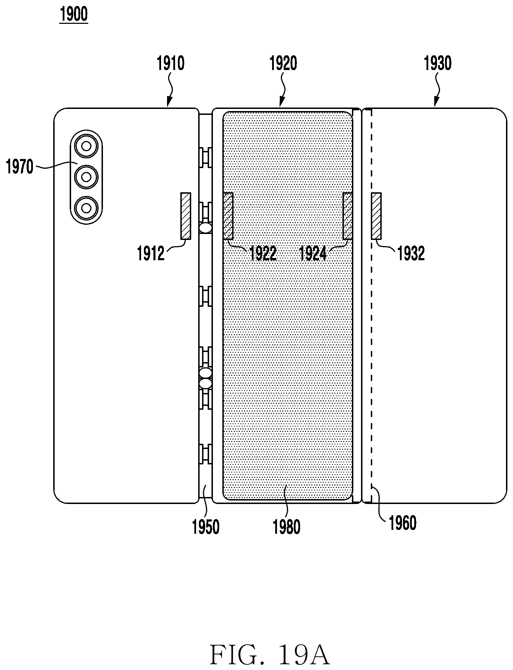

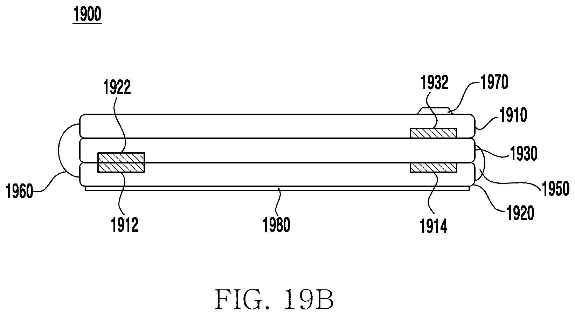

FIG. 19A illustrates an electronic device in an unfolded state according to an embodiment. FIG. 19B illustrates an electronic device in a folded state according to an embodiment.

Referring to FIGS. 19A and 19B, an electronic device 1900 (e.g., the electronic device 101 of FIG. 1 or the electronic device 200 of FIG. 13) according to an embodiment may include a first housing 1910 (e.g., the first housing 210 of FIG. 3A), a second housing 1920 (e.g., the second housing 220 of FIG. 3A), and a third housing 1930 (e.g., the second housing 220 of FIG. 3A), a first hinge assembly 1950 (e.g., the hinge assembly 340 of FIG. 3A), and a second hinge assembly 1960 (e.g., the hinge assembly 340 of FIG. 3A). In an embodiment, the electronic device 1900 may include a camera module 1970 (e.g., the second camera module 208 of FIG. 2B) exposed through the first housing 1910 by being disposed in the first housing 1910, and a display 1980 (e.g., the second display 231 of FIG. 2B) disposed in the second housing 1920 to be seen from the outside.

In an embodiment, the electronic device 1900 may include a first antenna module 1912 disposed in the first housing 1910, a second antenna module 1922 and a third antenna module 1924 disposed in the second housing 1920, and a fourth antenna module 1932 disposed in the third housing 1930. The first antenna module 1912 may be located adjacent to the second housing 1920, and the second antenna module 1922 may be located adjacent to the first housing 1910. The first antenna module 1912 and the second antenna module 1922 may be disposed to face each other. The third antenna module 1924 may be located adjacent to the third housing 1930, and the fourth antenna module 1932 may be located adjacent to the second housing 1920. The third antenna module 1924 and the fourth antenna module 1932 may be disposed to face each other.

Referring to FIG. 19A, in a state (e.g., the first state) in which the electronic device 1900 is unfolded, the second housing 1920 may be disposed between the first housing 1910 and the third housing 1930. The first housing 1910 may be rotatably coupled to a side of the second housing 1920 through the first hinge assembly 1950, and the third housing 1930 may be rotatably coupled to another side of the second housing 1920 through the second hinge assembly 1960.

Referring to FIG. 19B, the third housing 1930 may be overlain on the second housing 1920, and the first housing 1910 may be overlain on the third housing 1930 in a state (e.g., the second state) in which the electronic device 1900 is folded.

Although not illustrated, the electronic device 1900 may include link assemblies (e.g., the first link assembly 382 or the second link assembly 384 of FIG. 3A) configured to rotate antenna modules 1912, 1914, 1922, and 1932, respectively. Accordingly, while the first housing 1910 rotates with respect to the second housing 1920, the first antenna module 1912 may rotate to face the second antenna module 1922. While the second housing 1920 rotates with respect to the first housing 1910, the second antenna module 1922 may rotate to face the first antenna module 1912. While the second housing 1920 rotates with respect to the third housing 1930, the third antenna module 1924 may rotate to face the fourth antenna module 1932. While the third housing 1930 rotates with respect to the second housing 1920, the fourth antenna module 1932 may rotate to face the third antenna module 1924.

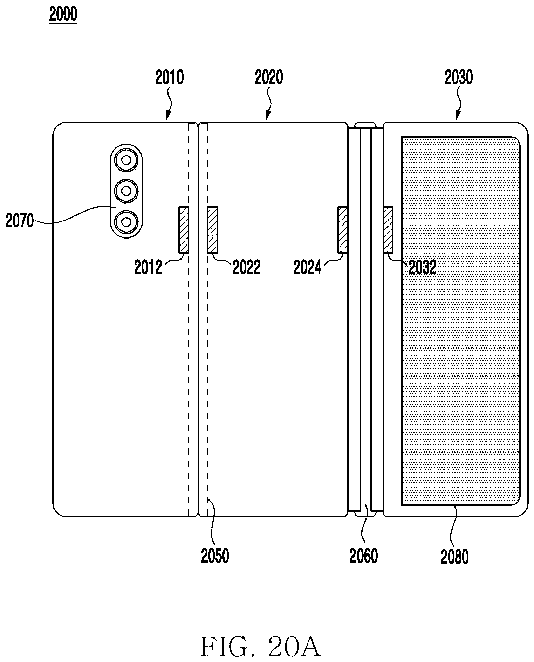

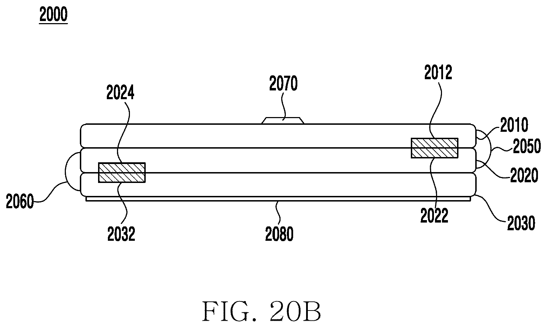

FIG. 20A illustrates an electronic device in an unfolded state according to an embodiment. FIG. 20B illustrates an electronic device in a folded state according to an embodiment.

Referring to FIGS. 20A and 20B, an electronic device 2000 (e.g., the electronic device 101 of FIG. 1 or the electronic device 200 of FIG. 13) according to an embodiment may include a first housing 2010 (e.g., the first housing 210 of FIG. 3A), a second housing 2020 (e.g., the second housing 220 of FIG. 3A), and a third housing 2030 (e.g., the second housing 220 of FIG. 3A), a first hinge assembly 2050 (e.g., the hinge assembly 340 of FIG. 3A), and a second hinge assembly 2060 (e.g., the hinge assembly 340 of FIG. 3A). In an embodiment, the electronic device 2000 may include a camera module 2070 (e.g., the second camera module 208 of FIG. 2B) exposed through the first housing 2010 by being disposed in the first housing 2010, and a display 2080 (e.g., the second display 231 of FIG. 2B) disposed in the second housing 1920 to be seen from the outside.

In an embodiment, the electronic device 2000 may include a first antenna module 2012 disposed in the first housing 2010, a second antenna module 2022 and a third antenna module 2024 disposed in the second housing 2020, and a fourth antenna module 2032 disposed in the third housing 2030. The first antenna module 2012 may be located adjacent to the second housing 2020, and the second antenna module 2022 may be located adjacent to the first housing 2010. The first antenna module 2012 and the second antenna module 2022 may be disposed to face each other. The third antenna module 2024 may be located adjacent to the third housing 2030, and the fourth antenna module 2032 may be located adjacent to the second housing 2020. The third antenna module 2024 and the fourth antenna module 2032 may be disposed to face each other.

Referring to FIG. 20A, in a state (e.g., the first state) in which the electronic device 2000 is unfolded, the second housing 2020 may be disposed between the first housing 2010 and the third housing 2030. The first housing 2010 may be rotatably coupled to a side of the second housing 2020 through the first hinge assembly 2050, and the third housing 2030 may be rotatably coupled to another side of the second housing 2020 through the second hinge assembly 2060.

Referring to FIG. 20B, in a state (e.g., the second state) in which the electronic device 2000 is folded, the second housing 2020 may be overlain on the third housing 2030, and the first housing 2010 may be overlain on the second housing 2020.

Although not illustrated, the electronic device 2000 may include link assemblies (e.g., a first link assembly 382 or a second link assembly 384 of FIG. 3A) configured to rotate the antenna modules 2012, 2014, 2022, and 2032, respectively. Accordingly, while the first housing 2010 rotates with respect to the second housing 2020, the first antenna module 2012 may rotate to face the second antenna module 2022. While the second housing 2020 rotates with respect to the first housing 2010, the second antenna module 2022 may rotate to face the first antenna module 2012. While the second housing 2020 rotates with respect to the third housing 2030, the third antenna module 2024 may rotate to face fourth antenna module 2032. While the third housing 2030 rotates with respect to the second housing 2020, the fourth antenna module 2032 may rotate to face the third antenna module 2024.

According to an embodiment, an electronic device (e.g., the electronic device 200 of FIG. 5) may include a first housing part (e.g., the first housing 210 of FIG. 5), a second housing part (e.g., the second housing 220 of FIG. 5) rotatably coupled to the first housing part, a first antenna module (e.g., the first antenna module 463 of FIG. 5) located in the first housing part, a first wireless communication circuit (e.g., the first wireless communication circuit 322 of FIG. 3B) disposed in the first housing part, and electrically connected to the first antenna module, a second antenna module (e.g., the second antenna module 563 of FIG. 5) located in the second housing part, and a second wireless communication circuit (e.g., the second wireless communication circuit 324 in FIG. 3B) disposed in the second housing part, and electrically connected to the second antenna module, a first link assembly (e.g., the first link assembly 382 in FIG. 5) configured to rotate the first antenna module such that the first antenna module faces the second antenna module while the first housing part rotates with respect to the second housing part, and a second link assembly (e.g., the second link assembly 384 of FIG. 5) configured to rotate the second antenna module such that the second antenna module faces the first antenna module while the second housing part rotates with respect to the first housing part. The first wireless communication circuit may be configured to transmit a radio frequency (RF) signal through the first antenna module. The second wireless communication circuit may be configured to receive the RF signal through the second antenna module.

According to an embodiment, an electronic device (e.g., the electronic device 200 of FIG. 5) may include a first housing part (e.g., the first housing 210 of FIG. 5), a second housing part (e.g., the second housing 220 of FIG. 5) rotatably coupled to the first housing part, a first antenna module (e.g., the first antenna module 463 of FIG. 5) located in the first housing part, a first wireless communication circuit (e.g., the first wireless communication circuit 322 of FIG. 3B) disposed in the first housing part, and electrically connected to the first antenna module, a second antenna module (e.g., the second antenna module 563 of FIG. 5) located in the second housing part, a second wireless communication circuit (e.g., the second wireless communication circuit 324 of FIG. 3B) disposed in the second housing part, and electrically connected to the second antenna module, a first link assembly (e.g., the first link assembly 382 of FIG. 5) configured to rotate the first antenna module, and a second link assembly (e.g., the second link assembly 384 of FIG. 5) configured to rotate the second antenna module. While the first housing part rotates with respect to the second housing part, a radiation direction of the first antenna module and a radiation direction of the second antenna module may face each other. The first wireless communication circuit may be configured to transmit or receive a radio frequency (RF) signal through the first antenna module. The second wireless communication circuit may be configured to receive or transmit the RF signal through the second antenna module.

According to an embodiment, the electronic device may include a first antenna housing (e.g., the first antenna housing 461 of FIG. 5) disposed in the first housing part, and accommodating the first antenna module, a first flexible printed circuit board (e.g., the connecting member 1050 of FIG. 10A) including a portion extending around the first antenna housing, a second antenna housing (e.g., the second antenna housing 561 of FIG. 5) disposed in the second housing part, and accommodating the second antenna module, and a second flexible printed circuit board including a portion extending around the second antenna housing. The first wireless communication circuit may be electrically connected to the first antenna module through the first flexible printed circuit board. The second wireless communication circuit may be electrically connected to the second antenna module through the second flexible printed circuit board.

In an embodiment, an unfolded state in which the first housing part and the second housing part lie on a plane, and a folded state in which the first housing part and the second housing part at least partially face each other may be included. An alignment relationship of the first antenna module and the second antenna module in the unfolded state may be substantially the same as an alignment relationship of the first antenna module and the second antenna module in the folded state.

In an embodiment, the electronic device may include one or more electronic components disposed in the second housing part. The first wireless communication circuit may be configured to, based on a first plurality of control signals related to the one or more electronic components, obtain a first signal in which the first plurality of control signals are integrated. The first wireless communication circuit may be configured to transmit the RF signal based on the first integrated signal.

In an embodiment, the second wireless communication circuit may be configured to obtain, by disaggregating the RF signal received through the second antenna module, a second plurality of control signals related to the one or more electronic components. The second wireless communication circuit may be configured to transmit the second plurality of control signals to the one or more electronic components.

In an embodiment, the electronic device may include at least one processor (e.g., the processor 120 of FIG. 1) disposed in the first housing part. The first wireless communication circuit may be configured to receive the first plurality of control signals from the at least one processor.

In an embodiment, the first link assembly may include a first rack gear (e.g., the first rack gear 483 of FIG. 5) slidably coupled to the first housing part, one or more first pinion gears (e.g., the pinion gears 485 and 487 of FIG. 5) configured to rotate according to sliding of the first rack gear, and a first shaft (e.g., the first shaft 465 of FIG. 5) rotating in conjunction with rotation of the one or more first pinion gears. The first antenna module may be coupled to the first shaft to rotate in conjunction with rotation of the first shaft. The second link assembly may include a second rack gear (e.g., the second rack gear 565 of FIG. 5) slidably coupled to the second housing part, one or more second pinion gears (e.g., the pinion gears 585 and 587 of FIG. 5) configured to rotate according to sliding of the second rack gear, and a second shaft (e.g., the second shaft 565 of FIG. 5) rotating in conjunction with rotation of the one or more second pinion gears. The second antenna module may be coupled to the second shaft to rotate in conjunction with rotation of the second shaft.

In an embodiment, the electronic device may include a hinge assembly (e.g., the hinge assembly 340 of FIG. 5) coupled to the first housing part and the second housing part. The first link assembly may include a first link (e.g., the first link 481 of FIG. 5). A first distal end of the first link may be rotatably coupled to the hinge assembly. A second distal end of the first link may be rotatably coupled to the first rack gear. The second link assembly may include a second link (e.g., the second link 581 of FIG. 5). A first distal end of the second link may be rotatably coupled to the hinge assembly on an opposite side of the first link. A second distal end of the second link may be rotatably coupled to the second rack gear.

In an embodiment, the first link assembly may include a first bracket (e.g., the first bracket 489 of FIG. 5) supporting the one or more first pinion gears. The second link assembly may include a second bracket (e.g., the second bracket 589 of FIG. 5) supporting the one or more second pinion gears.

In an embodiment, the first housing part and the second housing part may be folded or unfolded with respect to one or more first axes. The first antenna module may rotate with respect to a second axis substantially parallel to the one or more first axes. The second antenna module may rotate with respect to a third axis substantially parallel to the one or more first axes.

In an embodiment, the electronic device may include a first antenna housing (e.g., the first antenna housing 461 of FIG. 5) fixedly disposed on the first housing part, and a second antenna housing (e.g., the second antenna housing 561 of FIG. 5) fixedly disposed on the second housing part. The first antenna module may be rotatably disposed in the first antenna housing. The second antenna module may be rotatably disposed in the second antenna housing.

In an embodiment, the electronic device may include a first antenna housing (e.g., the first antenna housing 461 of FIG. 5) rotatably disposed on the first housing part, and a second antenna housing (e.g., the second antenna housing 561 of FIG. 5) rotatably disposed on the second housing part. The first antenna module may be fixedly disposed in the first antenna housing and rotate together with the first antenna housing. The second antenna module may be fixedly disposed in the second antenna housing and rotate together with the second antenna housing.

In an embodiment, the electronic device may include a first support member (e.g., the support bracket 969 of FIG. 9) fixedly disposed on the first housing part, a second support member fixedly disposed on the second housing part. The first pinion gear may be located between a first distal end and a second distal end of the first shaft of the first link assembly. The first distal end of the first shaft may be fixedly coupled to the first antenna housing. The second distal end of the first shaft may be rotatably coupled to the first support member. The second pinion gear may be located between a first distal end and a second distal end of the second shaft of the second link assembly. The first distal end of the second shaft may be fixedly coupled to the second antenna housing. The second distal end of the second shaft may be rotatably coupled to the second support member.

According to an embodiment, the electronic device may include a third antenna module (e.g., the third antenna module 1463 of FIG. 14) located in the first housing part, a fourth antenna module (e.g., the fourth antenna module 1473 of FIG. 14) located in the second housing part, a third link assembly configured to rotate the third antenna module such that the third antenna module faces the fourth antenna module while the first housing part rotates with respect to the second housing part, and a fourth link assembly configured to rotate the fourth antenna module such that the fourth antenna module faces the third antenna module while the second housing part rotates with respect to the first housing part. The third antenna module may be configured to transmit power to the second antenna module. The fourth antenna module may be configured to receive power from the first antenna module.

In an embodiment, the RF signal may have a frequency of 57GHz to 66GHz.

According to an embodiment, an electronic device (e.g., the electronic device 200 of FIG. 5) may include a first housing part (e.g., the first housing 210 of FIG. 5), a second housing part (e.g., the second housing 220 of FIG. 5) rotatably coupled to the first housing part, a first antenna module (e.g., the first antenna module 463 of FIG. 5) located in the first housing part, and including a surface on which a first antenna array is arranged, a first wireless communication circuit (e.g., the first wireless communication circuit 322 of FIG. 3B) disposed in the first housing part, and electrically connected to the first antenna module, a second antenna module (e.g., the second antenna module 563 of FIG. 5) located in the second housing part, and including a surface on which a second antenna array is arranged, a second wireless communication circuit (e.g., the second wireless communication circuit 324 of FIG. 3B) disposed in the second housing part, and electrically connected to the second antenna module, a first link assembly (e.g., the first link assembly 382 of FIG. 5) configured to rotate the first antenna module such that the surface on which the first antenna array of the first antenna module is arranged faces the second antenna module while the first housing part rotates with respect to the second housing part, and a second link assembly (e.g., the second link assembly 384 of FIG. 5) configured to rotate the second antenna module such that the surface on which the second antenna array of the second antenna module is arranged faces the first antenna module while the second housing part rotates with respect to the first housing part. The first wireless communication circuit may be configured to transmit a radio frequency (RF) signal through the first antenna module. The second wireless communication circuit may be configured to receive the RF signal through the second antenna module.

In an embodiment, the electronic device may include an electronic component disposed in the second housing. The first wireless communication circuit may be configured to transmit a control signal related to the electronic component using the first antenna module. The second wireless communication circuit may be configured to receive the control signal related to the electronic component using the second antenna module.

In an embodiment, the first link assembly may include a first rack gear (e.g., the first rack gear 483 of FIG. 5) slidably coupled to the first housing part, one or more first pinion gears (e.g., the pinion gears 485 and 487 of FIG. 5) configured to rotate according to sliding of the first rack gear, and a first shaft (e.g., the first shaft 465 of FIG. 5) rotating in conjunction with rotation of the one or more first pinion gears. The first antenna module may be coupled to the first shaft to rotate in conjunction with rotation of the first shaft. The second link assembly may include a second rack gear (e.g., the second rack gear 583 of FIG. 5) slidably coupled to the second housing part, one or more second pinion gears (e.g., the pinion gears 585 and 587 of FIG. 5) configured to rotate according to sliding of the second rack gear, and a second shaft (e.g., the second shaft 565 of FIG. 5) rotating in conjunction with rotation of the one or more second pinion gears. The second antenna module may be coupled to the second shaft to rotate in conjunction with rotation of the second shaft.

In an embodiment, the electronic device may include a hinge device (e.g., the hinge devices 240 and 240-1 of FIG. 2C) coupled to the first housing part and the second housing part, and a hinge cover (e.g., the hinge cover 250 of FIG. 5) having opposing lateral sides, and accommodating the hinge device. The first link assembly may include a first link (e.g., the first link 481 of FIG. 5), a first distal end of the first link may be rotatably coupled to the first lateral side of the hinge cover, a second distal end of the first link may be rotatably coupled to the first rack gear, the second link assembly may include a second link (e.g., the second link 581 of FIG. 5), a first distal end of the second link may be rotatably coupled to the second lateral side of the hinge cover, and a second distal end of the second link may be rotatably coupled to the second rack gear.

In an embodiment, a rotational path of the first link with respect to the first lateral side of the hinge cover may be different from a rotational path of the first housing part with respect to the second housing part. A rotational path of the second link with respect to the second lateral side of the hinge cover may be different from a rotational path of the second housing part with respect to the first housing part.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

The various Figures may show coordinate axes. These axes may be referred to as x axis, y axis, and/or z axis. It should be appreciated that these axes define a Cartesian coordinate system. The x axis is perpendicular to the y axis and to the z axis. The y axis is perpendicular to the x axis and to the z axis. The z axis is perpendicular to the x axis and to the y axis.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
a first housing part (210);
a second housing part (220) rotatably coupled to the first housing part (210);
a first antenna module (463) located in the first housing part (210);
a first wireless communication circuit (322) disposed in the first housing part (210), and electrically connected to the first antenna module (463);
a second antenna module (563) located in the second housing part (220);
a second wireless communication circuit (324) disposed in the second housing part (220), and electrically connected to the second antenna module (563);
a first link assembly (382) configured to rotate the first antenna module (463); and
a second link assembly (384) configured to rotate the second antenna module (563), and
wherein, while the first housing part (210) rotates with respect to the second housing part (220), a radiation direction of the first antenna module (463) and a radiation direction of the second antenna module (563) face each other,
wherein the first wireless communication circuit (322) is configured to transmit or receive a radio frequency (RF) signal through the first antenna module (463), and
the second wireless communication circuit (324) is configured to receive or transmit the RF signal through the second antenna module (563).

2. The electronic device (200) of claim 1, further comprising:
a first antenna housing (461) disposed in the first housing part (210), and accommodating the first antenna module (463);
a first flexible printed circuit board (FPCB) (1050) including a portion extending around the first antenna housing (461);
a second antenna housing (561) disposed in the second housing part (220), and accommodating the second antenna module (563); and
a second FPCB including a portion extending around the second antenna housing (561), and
wherein the first wireless communication circuit (322) is electrically connected to the first antenna module (463) through the first FPCB and,
wherein the second wireless communication circuit (324) is electrically connected to the second antenna module (563) through the second FPCB.

3. The electronic device (200) of claim 1 or claim 2, further comprising:
an unfolded state in which the first housing part (210) and the second housing part (220) lie on a plane; and
a folded state in which the first housing part (210) and the second housing part (220) at least partially face each other, and
wherein an alignment of the first antenna module (463) relative to the second antenna module (563) in the unfolded state is substantially the same as an alignment of the first antenna module (463) relative to the second antenna module (563) in the folded state.

4. The electronic device (200) of any one of claims 1 to 3, further comprising:
one or more electronic components disposed in the second housing part (220), and
wherein the first wireless communication circuit (322) is configured to:
based on a first plurality of control signals related to the one or more electronic components, obtain a first signal in which the first plurality of control signals are integrated; and
transmit the RF signal based on the first signal.

5. The electronic device (200) of claim 4,
wherein the second wireless communication circuit (324) is configured to:
obtain, by disaggregating the RF signal received through the second antenna module (563), a second plurality of control signals related to the one or more electronic components; and
transmit the second plurality of control signals to the one or more electronic components.

6. The electronic device (200) of claim 4 or claim 5, comprising:
at least one processor (120) disposed in the first housing part (210), and
wherein the first wireless communication circuit (322) is configured to receive the first plurality of control signals from the at least one processor (120).

7. The electronic device (200) of any one of claims 1 to 6, wherein:
the first link assembly (382) includes:
a first rack gear (483) slidably coupled to the first housing part (210);
one or more first pinion gears (485; 487) configured to rotate according to a sliding of the first rack gear (483); and
a first shaft (465) configured to rotate in conjunction with a rotation of the one or more first pinion gears (485; 487), and
wherein the first antenna module (463) is coupled to the first shaft (465) to rotate in conjunction with a rotation of the first shaft (465);
the second link assembly (384) includes:
a second rack gear (583) slidably coupled to the second housing part (220);
one or more second pinion gears (585; 587) configured to rotate according to a sliding of the second rack gear (583);
a second shaft (565) configured to rotate in conjunction with a rotation of the one or more second pinion gears (585; 587) and
the second antenna module (563) is coupled to the second shaft (565) to rotate in conjunction with a rotation of the second shaft (565).

8. The electronic device (200) of claim 7, further comprising:
a hinge assembly (340) coupled to the first housing part (210) and the second housing part (220), and
wherein:
the first link assembly (382) includes a first link (481);
a first distal end of the first link (481) is rotatably coupled to the hinge assembly (340);
a second distal end of the first link (481) is rotatably coupled to the first rack gear (483);
the second link assembly (384) includes a second link (581);
a first distal end of the second link (581) is rotatably coupled to the hinge assembly (340) on an opposite side of the first link (481); and
a second distal end of the second link (581) is rotatably coupled to the second rack gear (583).

9. The electronic device (200) of claim 7 or claim 8, wherein:
the first link assembly (382) includes a first bracket (489) supporting the one or more first pinion gears (485; 487); and
the second link assembly (384) includes a second bracket (589) supporting the one or more second pinion gears (585; 587).

10. The electronic device (200) of any one of claims 7 to 9, wherein:
the first housing part (210) and the second housing part (220) are configured to be folded or unfolded about one or more first axes;
the first antenna module (463) is configured to rotate about a second axis substantially parallel to the one or more first axes;
the second antenna module (563) is configured to rotate about a third axis substantially parallel to the one or more first axes.

11. The electronic device (200) of any one of claims 7 to 10, further comprising:
a first antenna housing (461) fixedly disposed on the first housing part (210); and
a second antenna housing (561) fixedly disposed on the second housing part (220), and
wherein the first antenna module (463) is rotatably disposed in the first antenna housing (461), and
the second antenna module (563) is rotatably disposed in the second antenna housing (561).

12. The electronic device (200) of any one of claims 7 to 10, further comprising:
a first antenna housing (461) rotatably disposed on the first housing part (210); and
a second antenna housing (561) rotatably disposed on the second housing part (220), and
wherein the first antenna module (463) is fixedly disposed within the first antenna housing (461) and configured to rotate together with the first antenna housing (461), and
wherein the second antenna module (563) is fixedly disposed within the second antenna housing (561) and configured to rotate together with the second antenna housing (561).

13. The electronic device (200) of claim 12, further comprising:
a first support member (969) fixedly disposed on the first housing part (210); and
a second support member fixedly disposed on the second housing part (220), and
wherein:
the first pinion gear is located between a first distal end and a second distal end of the first shaft (465) of the first link assembly (382);
the first distal end of the first shaft (465) is fixedly coupled to the first antenna housing (461);
the second distal end of the first shaft (465) is rotatably coupled to the first support member (969);
the second pinion gear is located between a first distal end and a second distal end of the second shaft (565) of the second link assembly (384);
the first distal end of the second shaft (565) is fixedly coupled to the second antenna housing (561);
the second distal end of the second shaft (565) is rotatably coupled to the second support member.

14. The electronic device (200) of any one of claims 1 to 13, further comprising:
a third antenna module (1463) located in the first housing part (210); and
a fourth antenna module (1473) located in the second housing part (220),
wherein the third antenna module (1463) is configured to transmit power to the second antenna module (563), and
the fourth antenna module (1473) is configured to receive power from the first antenna module (463).

15. The electronic device (200) of any one of claims 1 to 14,
wherein the RF signal has a frequency of 57.00 GHz to 66.00 GHz.
